(19) Europäisches Patentamt
European Patent Office
Office européen des brevets

(11) EP 4 270 865 A1

# (12) EUROPEAN PATENT APPLICATION
published in accordance with Art. 153(4) EPC

(43) Date of publication:
**01.11.2023 Bulletin 2023/44**

(21) Application number: **20967979.4**

(22) Date of filing: **28.12.2020**

(51) International Patent Classification (IPC):
***H04L 9/32** (2006.01)*

(52) Cooperative Patent Classification (CPC):
**H04L 9/32**

(86) International application number:
**PCT/JP2020/049119**

(87) International publication number:
**WO 2022/144966 (07.07.2022 Gazette 2022/27)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Fujitsu Limited**
**Kawasaki-shi, Kanagawa 211-8588 (JP)**

(72) Inventors:
- **YAMAOKA, Mebae**
  **Kawasaki-shi, Kanagawa 211-8588 (JP)**
- **FUKUOKA, Takeru**
  **Kawasaki-shi, Kanagawa 211-8588 (JP)**
- **SAKAMOTO, Takuya**
  **Kawasaki-shi, Kanagawa 211-8588 (JP)**

(74) Representative: **Hoffmann Eitle**
**Patent- und Rechtsanwälte PartmbB**
**Arabellastraße 30**
**81925 München (DE)**

## (54) INFORMATION PROCESSING SYSTEM, CONTROL METHOD, INFORMATION PROCESSING DEVICE, AND CONTROL PROGRAM

(57) The data volume of proof information for proving the authenticity of an item value is reduced.

An information processing apparatus (10) generates a commitment (17) by obfuscating item values (15a, 15b), and generates zero-knowledge proof information (18) for proving that a user has knowledge of the item values (15a, 15b). The information processing apparatus (10) sends an item value (16), the commitment (17), and the zero-knowledge proof information (18) to an information processing apparatus (20). The information processing apparatus (20) generates a commitment (23) from the item value (16). The information processing apparatus (20) verifies the authenticity of the received item value (16) on the basis of the relationship between the commitments (17, 23) and a commitment (31) registered in a database (30) and the zero-knowledge proof information (18).

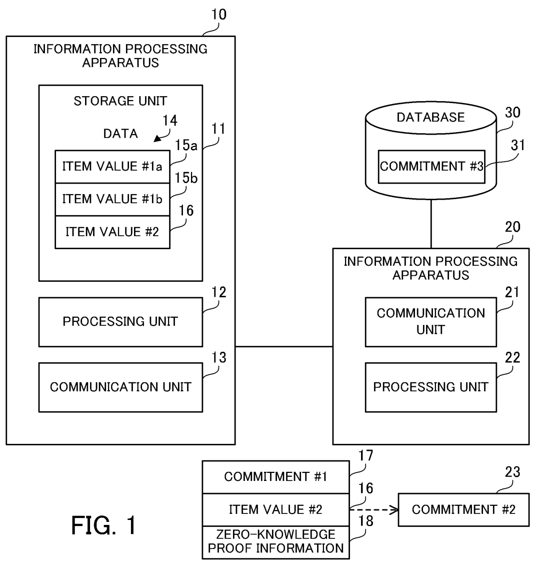


FIG. 1

EP 4 270 865 A1

## Description

### Technical Field

The embodiments discussed herein relate to an information processing system, a control method, an information processing apparatus, and a control program.

### Background Art

There may be a case where a user wants to prove to the third party the authenticity that his/her data has not been tampered with. To prove the authenticity of data, a database such as a blockchain may be used, which does not allow any fraudulent modification of data once the data is registered. Here, from the point of view of data protection, not the original data itself but a converted value obtained by converting the data using a conversion function may be registered in the database. The converted value may be called a commitment and may be a symbol string or numerical value from which it is difficult to deduce the original data.

For example, an information processing apparatus converts data to a commitment and registers the commitment in a database. Then, the information processing apparatus sends the original data to another information processing apparatus. The other information processing apparatus converts the received data to a commitment and compares it with the commitment registered in the database. When these two commitments are equal, the other information processing apparatus determines that the received data has not been tampered with.

There may be another case where a user wants to prove to the third party that he/she knows data without revealing the data itself to the third party, from the point of view of security. For this case, a cryptographic technology called a zero-knowledge proof may be used. In the zero-knowledge proof, an information processing apparatus generates, from the original data, zero-knowledge proof information that is very difficult or almost impossible to be generated by chance without knowledge of the original data, and sends the zero-knowledge proof information to another information processing apparatus. The other information processing apparatus verifies the received zero-knowledge proof information with a particular algorithm to determine whether the received zero-knowledge proof information proves the user's knowledge.

For the zero-knowledge proof, there has been proposed a cryptographic library that performs anonymous user authentication, for example. With respect to each hidden item that is not revealed to the other party, the proposed cryptographic library masks an item value with a random number to thereby generate mask data. In addition, the cryptographic library generates zero-knowledge proof information, which proves possession of knowledge of the item value and random number, in association with the mask data. The cryptographic library then sends the mask data and zero-knowledge proof information to the other party.

### Citation List

### Non-Patent Literature

[NPTL1] IBM Research - Zurich, "Specification of the Identity Mixer Cryptographic Library", Version 2.3.0, April 29, 2010

### Summary of Invention

### Technical Problem

A user may want to prove to the third party the authenticity of a specific item value among a plurality of item values included in data, while concealing the other item values. However, a conventional technique for authenticity proof using a database registers a commitment corresponding to the entire data in the database, and involves revealing the original entire data as proof information to the other party. In addition, the above-described conventional zero-knowledge proof technology sends to the other party the mask data and zero-knowledge proof information for each item value that is desired to be concealed. Therefore, if the zero-knowledge proof is applied to implement the above-described authenticity proof, the data volume of the proof information may increase.

According to one aspect, the present disclosure intends to reduce the data volume of proof information for proving the authenticity of an item value.

Solution to Problem

According to one aspect, there is provided an information processing system including a first information processing apparatus and a second information processing apparatus. The first information processing apparatus generates a first commitment by obfuscating two or more first item values among a plurality of item values included in data, and generates zero-knowledge proof information from the two or more first item values, the zero-knowledge proof information being used to prove that a user of the first information processing apparatus has knowledge of the two or more first item values. The first information processing apparatus sends a second item value among the plurality of item values, the generated first commitment, and the generated zero-knowledge proof information to the second information processing apparatus. The second information processing apparatus generates a second commitment from the received second item value. The second information processing apparatus verifies authenticity of the received second item value, based on relationship between the first and second commitments and a third commitment stored in a database and the received zero-knowledge proof information.

According to another aspect, there is provided a control method executed by a first information processing apparatus and a second information processing apparatus. According to yet another aspect, there is provided an information processing apparatus including a communication unit and a processing unit. According to yet another aspect, there is provided a control program that a computer is caused to execute.

Advantageous Effects of Invention

According to one aspect, the data volume of proof information for proving the authenticity of an item value is reduced.

The foregoing and other objects, features, and advantages of the present disclosure will become apparent from the following description of preferred embodiments, when read together with the accompany drawings.

Brief Description of Drawings

[FIG. 1] FIG. 1 is a view for describing an information processing system according to a first embodiment.
[FIG. 2] FIG. 2 illustrates an example of an information processing system according to a second embodiment.
[FIG. 3] FIG. 3 is a block diagram illustrating an example of the hardware configuration of a terminal device.
[FIG. 4] FIG. 4 illustrates an example of the structure of a blockchain.
[FIG. 5] FIG. 5 illustrates an example of data that is used in an authenticity proof of a revealed item.
[FIG. 6] FIG. 6 illustrates an example of data that is used in a range proof of a hidden item.
[FIG. 7] FIG. 7 illustrates an example of computing the products of commitments.
[FIG. 8] FIG. 8 is a block diagram illustrating an example of functions of the information processing system.
[FIG. 9] FIG. 9 illustrates an example of data stored in a database server and terminal device.
[FIG. 10] FIG. 10 is a flowchart illustrating a proof information generation procedure.
[FIG. 11] FIG. 11 is a flowchart illustrating a proof information verification procedure.
[FIG. 12] FIG. 12 is a block diagram illustrating another example of functions of the information processing system.

Description of Embodiments

Embodiments will be described with reference to drawings.

(First Embodiment)

A first embodiment will be described.

FIG. 1 is a view for describing an information processing system according to the first embodiment.

The information processing system according to the first embodiment includes information processing apparatuses 10 and 20 and a database 30. The information processing apparatus 10 is a transmission apparatus that sends proof information for proving the authenticity that data has not been tampered with. The information processing apparatus 20 is a verification apparatus that receives the proof information and verifies the authenticity of the data. Each information processing apparatus 10 and 20 may be a terminal device that a user operates or a server device.

The database 30 is accessed by the information processing apparatus 20 for verifying authenticity. Data may be registered in the database 30 by the information processing apparatus 10. The database 30 may be stored in the information processing apparatus 20 or in a database server different from the information processing apparatuses 10 and 20. The database 30 may be a database that does not allow any fraudulent modification of data, or may be a blockchain.

The information processing apparatus 10 includes a storage unit 11, a processing unit 12, and a communication unit 13. The information processing apparatus 20 includes a communication unit 21 and a processing unit 22. The storage unit 11 may be a volatile semiconductor memory, such as a random-access memory (RAM), or a non-volatile storage device, such as a hard disk drive (HDD) or a flash memory.

For example, each processing unit 12 and 22 is a processor such as a central processing unit (CPU), a graphics processing unit (GPU), or a digital signal processor (DSP). Each processing unit 12 and 22 may include an application-specific integrated circuit (ASIC), a field programmable gate array (FPGA), or another application specific electronic circuit. Such a processor executes programs stored in a memory such as RAM. A set of multiple processors may be called a multiprocessor, or simply "a processor."

Each communication unit 13 and 21 is a communication interface that performs data communication over a network. The communication unit 13 communicates with the information processing apparatus 20. The communication unit 21 communicates with the information processing apparatus 10. The network may include local area network (LAN) or may include a wide area network such as the Internet. Each communication unit 13 and 21 may be a wired communication interface that is connected to a wired communication device such as a switch or a router with a cable or may be a wireless communication interface that is connected to a wireless communication device such as an access point or a base station with a wireless link.

The storage unit 11 stores therein data 14 a certain user knows. The data 14 may be transaction data about a contract such as a product sales contract or a service provision contract. The data 14 includes two or more item values including item values 15a and 15b and an item value 16. For example, each item value 15a, 15b, and 16 is a human-understandable character string or numerical value. As an example, each item value 15a, 15b, and 16 is a transaction date and time, a business partner, a product name or a service name, a transaction amount, or another. In the first embodiment, the information processing apparatus 10 does not reveal but conceal two or more item values including the item values 15a and 15b from the information processing apparatus 20, and reveals the item value 16 to the information processing apparatus 20, in order to make an attempt to prove the authenticity of the revealed item value 16. For example, among the transaction data, the information processing apparatus 10 conceals the business partner and reveals the transaction amount.

To prove the authenticity, the processing unit 12 generates a commitment 17 by obfuscating the item values 15a and 15b. For example, the commitment 17 is a symbol string or numerical value from which it is very difficult to deduce the item values 15a and 15b. Here, one commitment may be generated for two or more item values. The conversion from the item values 15a and 15b to the commitment 17 may be unidirectional conversion, which does not allow the reversed conversion from the commitment 17 to the item values 15. Such obfuscation of the item values 15 may be called "making unreadable."

In addition, the processing unit 12 generates zero-knowledge proof information 18 for proving that a prover who is the user of the information processing apparatus 10 has the knowledge of the item values 15a and 15b. For example, the zero-knowledge proof information 18 is a symbol string or numerical value. The zero-knowledge proof information 18 is associated with the commitment 17. The processing unit 12 generates the zero-knowledge proof information 18 from the item values 15a and 15b used for the commitment 17. Here, one piece of zero-knowledge proof information may be generated for two or more item values. A zero-knowledge proof is to prove using the zero-knowledge proof information 18 that the commitment 17 has been generated with knowledge of the item values 15a and 15b, without revealing the item values 15a and 15b themselves. It is very difficult or almost impossible to generate by chance the zero-knowledge proof information 18 that is consistent with the commitment 17 without the knowledge of the item values 15a and 15b.

The communication unit 13 sends the item value 16 included in the data 14 and the commitment 17 and zero-knowledge proof information 18 generated by the processing unit 12 to the information processing apparatus 20. Note that the communication unit 13 does not need to send the item values 15a and 15b to the information processing apparatus 20.

The communication unit 21 receives the item value 16, commitment 17, and zero-knowledge proof information 18 from the information processing apparatus 10. The processing unit 22 reads a commitment 31 from the database 30. The commitment 31 corresponds to the entire data 14. For example, the commitment 31 is the product of the commitments of the item values 15a and 15b and the commitment of the item value 16. The information processing apparatus 10 may generate the commitment 31 and register it in the database 30. The information processing apparatus 20 verifies that the item value 16 has not been tampered with, using the item value 16, commitment 17, zero-knowledge proof information 18, and commitment 31.

To verify the authenticity, the processing unit 22 generates a commitment 23 from the received item value 16. For example, the commitment 23 is a symbol string or numerical value that is generated in the same manner as the commitment 17. The processing unit 22 verifies the authenticity of the received item value 16 on the basis of the relationship between the commitments 17 and 23 and the commitment 31 stored in the database 30, and the received zero-knowledge proof information 18.

For example, the processing unit 22 computes the product of the commitments 17 and 23 and determines whether the product is equal to the commitment 31. In the case where each commitment 17 and 23 is a numerical value with a specified number of digits, the product of the commitments 17 and 23 may be a numerical value (remainder) obtained by truncating excess digits. In addition, for example, using the commitment 17 and the zero-knowledge proof information 18, the processing unit 22 verifies that the zero-knowledge proof information 18 is consistent with the commitment 17. In the case where both the checking with the commitment 31 and the zero-knowledge proof of the item values 15 have succeeded, the processing unit 22 determines that the received item value 16 is true.

A case will now be described where, after the commitment 31 is registered in the database 30, the information processing apparatus 10 tampers with the item value 16 and gives the tampered item value 16 to the information processing apparatus 20. If the information processing apparatus 10 does not tamper with the commitment 17 corresponding to the item values 15a and 15b, the checking between the commitments 17 and 23 and the commitment 31 fails. Even if the information processing apparatus 10 tampers with the commitment 17 so that the checking succeeds, the information processing apparatus 10 is not able to compute back the item values 15a and 15b that produce the tampered commitment 17 because of the unidirectionality of the obfuscation. Therefore, the information processing apparatus 10 is not able to generate the zero-knowledge proof information 18 that is consistent with the tampered commitment 17, so that the zero-knowledge proof fails.

As described above, in the information processing system of the first embodiment, the information processing apparatus 10 generates the commitment 17 and zero-knowledge proof information 18 from the item values 15a and 15b and sends them together with the item value 16 to the information processing apparatus 20. The information processing apparatus 20 converts the item value 16 to the commitment 23, and checks the commitments 17 and 23 with the commitment 31 registered in the database 30 and also verifies the zero-knowledge proof information 18.

In the manner described above, the information processing apparatus 10 is able to prove the authenticity of the item value 16 included in the data 14 to the information processing apparatus 20, without revealing the item values 15a and 15b included in the data 14 to the information processing apparatus 20. This approach reduces the risk of leaking the item values 15a and 15b that are not targets in the authenticity proof, and strengthens the protection of the data 14. In addition, the information processing apparatus 10 is able to prove the authenticity of the item value 16, which is part of the data 14, using the database 30 that ensures the authenticity of the entire data 14.

In addition, even if the item value 16 revealed by the information processing apparatus 10 has been tampered with, the information processing apparatus 20 is able to detect that the item value 16 is not true. Therefore, the reliability of the proof information that the information processing apparatus 10 sends to the information processing apparatus 20 is maintained.

In addition, the commitment 17 that is involved in the zero-knowledge proof of the item values 15a and 15b is also used for the checking with the commitment 31. For example, the product of the commitment 17 used in the zero-knowledge proof of the item values 15a and 15b and the commitment 23 obtained by converting the item value 16 is compared with the commitment 31. In addition, the commitment 17 does not need to be generated for each hidden item value, but only one commitment may be generated from two or more hidden item values. Likewise, the zero-knowledge proof information 18 does not need to be generated for each hidden item value, but only one piece of zero-knowledge proof information may be generated. This enables reducing the data volume of proof information that the information processing apparatus 10 sends to the information processing apparatus 20.

(Second Embodiment)

A second embodiment will now be described.

FIG. 2 illustrates an example of an information processing system according to the second embodiment.

The information processing system of the second embodiment includes a plurality of database servers including database servers 41 and 42 and terminal devices 100 and 200. The terminal device 100 corresponds to the information processing apparatus 10 of the first embodiment. The terminal device 200 corresponds to the information processing apparatus 20 of the first embodiment. The database servers 41 and 42 and terminal devices 100 and 200 are connected to a network 40. The network 40 may include LAN or may include a wide area network such as the Internet.

The database servers 41 and 42 are server devices that manage blockchains. The database servers 41 and 42 may be called computers or information processing apparatuses. The blockchains may be called distributed ledgers. A blockchain is a database that does not allow any fraudulent modification of data without leaving traces of tampering once the data is registered. The database servers 41 and 42 hold the same blockchain. A plurality of database servers work together to ensure the authenticity of a blockchain. The blockchain corresponds to the database 30 of the first embodiment.

The terminal device 100 is a client device that a prover uses. The prover is a user who has certain data and proves to a verifier the authenticity that the data has not been tampered with. The terminal device 100 sends proof information for proving the authenticity of the data to the terminal device 200 in accordance with prover's operations. The terminal device 100 may be called a computer, an information processing apparatus, or a transmission apparatus. The terminal device 100 may be a smartphone, a tablet terminal, a personal computer, or another.

The terminal device 200 is a client device that the verifier uses. The verifier is a user who verifies the authenticity of the data held by the prover. The terminal device 200 receives the proof information from the terminal device 100 and verifies the authenticity of the data with reference to the blockchain. The terminal device 200 may be called a computer, an information processing apparatus, or a verification apparatus. The terminal device 200 may be a smartphone, a tablet terminal, a personal computer, or another.

For example, the information processing system of the second embodiment is used for the following applications. The first case is that the prover has license data such as driving license data. The license data includes items such as age and address. The prover proves to the verifier that the age included in the license data held by the prover is adult age, in order to legally purchase alcoholic beverage from the verifier. At this time, the prover may want to avoid revealing the entire license data to the verifier, from the point of view of the protection of the personal information.

The second case is that the prover has transaction data about a transaction involving transfer of money with the third party. The transaction data includes items such as a transaction amount and a business partner. The prover proves to the verifier that the transaction amount included in the transaction data held by the prover is less than or equal to a threshold, in order to claim legal tax treatment. At this time, the prover may want to avoid revealing the entire transaction data to the verifier, from the point of view of the confidentiality of the transaction.

The third case is that the prover proves to the verifier that the business partner included in the transaction data held by the prover is included in a predetermined list, in order to claim that the prover is doing business with a blue-chip company qualified by a public organization. At this time, the prover may want to avoid revealing the entire transaction data to the verifier, from the point of view of the confidentiality of the transaction.

FIG. 3 is a block diagram illustrating an example of the hardware configuration of a terminal device.

The terminal device 100 includes a CPU 101, a RAM 102, an HDD 103, a GPU 104, an input interface 105, a media reader 106, and a communication interface 107. These hardware units are connected to a bus. The CPU 101 corresponds to the processing unit 12 of the first embodiment. The RAM 102 or HDD 103 corresponds to the storage unit 11 of the first embodiment. The communication interface 107 corresponds to the communication unit 13 of the first embodiment.

The database servers 41 and 42 and terminal device 200 may have the same hardware configuration as the terminal device 100. For example, the CPU of the terminal device 200 corresponds to the processing unit 22 of the first embodiment. The communication interface of the terminal device 200 corresponds to the communication unit 21 of the first embodiment.

The CPU 101 is a processor that executes program commands. The CPU 101 loads at least part of a program and data from the HDD 103 to the RAM 102 and executes the program. The terminal device 100 may be provided with a plurality of processors. A set of processors may be called a multiprocessor, or simply "a processor."

The RAM 102 is a volatile semiconductor memory that temporarily stores therein programs that are executed by the CPU 101 and data that is used by the CPU 101 in processing. The terminal device 100 may be provided with a different kind of volatile memory than RAM.

The HDD 103 is a non-volatile storage device that stores therein software programs such as operating system (OS), middleware, and application software, and data. The terminal device 100 may be provided with a different kind of non-volatile storage device such as a flash memory or a solid-state drive (SSD).

The GPU 104 outputs images to a display device 111 connected to the terminal device 100 in conjunction with the CPU 101. For example, the display device 111 is a cathode ray tube (CRT) display, a liquid crystal display, an organic electroluminescence (EL) display, or a projector. Another output device such as a printer may be connected to the terminal device 100.

The input interface 105 receives input signals from an input device 112 connected to the terminal device 100. For example, the input device 112 is a mouse, a touch panel, or a keyboard. A plurality of kinds of input devices may be connected to the terminal device 100.

The media reader 106 is a reading device that reads programs and data from a storage medium 113. For example, the storage medium 113 is a magnetic disk, an optical disc, or a semiconductor memory. Magnetic disks include flexible disks (FDs) and HDDs. Optical discs include compact discs (CDs) and digital versatile discs (DVDs). The media reader 106 copies a program and data read from the storage medium 113 to another storage medium such as the RAM 102 or HDD 103. The read program may be executed by the CPU 101.

The storage medium 113 may be a portable storage medium. The storage medium 113 may be used for distribution of programs and data. In addition, the storage medium 113 and HDD 103 may be called computer-readable storage media.

The communication interface 107 is connected to the network 40. The communication interface 107 communicates with the database servers 41 and 42 and terminal device 200 over the network 40. The communication interface 107 may be a wired communication interface that is connected to a wired communication device such as a switch or a router or may be a wireless communication interface that is connected to a wireless communication device such as a base station or an access point.

FIG. 4 illustrates an example of the structure of a blockchain.

A blockchain that is managed by the database servers 41 and 42 includes a plurality of linearly-connected blocks. A new block is added to the end of the blockchain. As an example, the blockchain includes blocks 131, 132, and 133. The block 131 is followed by the block 132. The block 133 follows the block 132. The block 132 includes main data 134, a previous-block hash value 135, and a nonce value 136.

The main data 134 is a collection of records corresponding to transactions made within a fixed period of time. One record includes a transaction ID identifying a transaction and a commitment generated from transaction data. The commitment is a numerical value that is unreadable such that it is not possible to deduce the original transaction data. The commitment is generated using a unidirectional function.

The previous-block hash value 135 is a hash value that is generated from the entire block 131 previous to the block 132 using a hash function. The previous-block hash value 135 links the block 131 and the block 132. The nonce value 136 is a random number. The nonce value 136 affects a previous-block hash value that is to be included in the block 133 following the block 132. To tamper with a record included in a block in the middle of the blockchain, the previous-block hash values of all blocks after the block need to be re-computed. For this reason, it is very difficult to cover up the tampering of the blockchain, considering the computational complexity.

One record in the block 132 corresponds to transaction data 137. The transaction data 137 includes a plurality of items regarding one transaction. The transaction data 137 includes an item number, an item name, and a value with respect to each of the plurality of items. The item number is an integer indicating the order of an item. The item name is a character string indicating the name of the item. The value is a numerical value or character string as an item value.

As an example, the transaction data 137 includes four items. The first item is a "destination," and its value is "company A." The second item is a "remittance amount," and its value is "1,000,000 yen." The third item is a "remittance date," and its value is "October 22, 2020." The fourth item is a "product," and its value is "product B."

The following describes proof information that the terminal device 100 sends to the terminal device 200.

A commitment registered in the blockchain is a numerical value that is generated from the entire transaction data, in order to ensure the reliability of the transaction data efficiently. If the terminal device 100 sends the entire transaction data to the terminal device 200, the terminal device 200 is able to verify the authenticity of the received transaction data by converting the received transaction data to a commitment and checking the commitment against the blockchain. However, it may be desired that the terminal device 100 does not send at least one value included in the transaction data to the terminal device 200. To deal with this, the information processing system of the second embodiment achieves a proof while concealing at least one value.

FIG. 5 illustrates an example of data that is used in an authenticity proof of a revealed item.

In this example, the terminal device 100 conceals, among four values included in transaction data, the first value, second value, and third value and sends the fourth value to the terminal device 200. However, the terminal device 100 is not able to prove that the fourth value is a true value included in the transaction data, by sending only the fourth value to the terminal device 200. To achieve the proof, the terminal device 100 generates a commitment to be registered in a blockchain with a particular method, and sends information for proving the authenticity of the fourth value, as well as the fourth value, to the terminal device 200.

First, the terminal device 100 converts each of the four values included in the transaction data to a commitment, thereby generating commitments 142 to 145 (commitments $C_1$, $C_2$, $C_3$, and $C_4$). In the case where the value of a certain item is a character string, the terminal device 100 first replaces the character string with a numerical value such as character codes, and then coverts the numerical value to a commitment. A specific example of the function of generating the commitments 142 to 145 will be described later.

The terminal device 100 computes the product of the generated commitments 142 to 145 as a commitment 141 (commitment C). The commitments 141 to 145 are numerical values and may have the same number of digits. When the product of two commitments is computed, the remainder after truncating excess digits of the arithmetic product of the commitments may be used as the product. The terminal device 100 registers the commitment 141, which is the product of the commitments 142 to 145, in the blockchain.

After the commitment 141 is registered in the blockchain, the terminal device 100 makes an attempt to reveal the fourth value 153 (value $v_4$) among the four values to the terminal device 200. At this time, the terminal device 100 computes the product of the commitments 142, 143, and 144 corresponding to the hidden items as a commitment 151 (commitment $C_{hidden}$).

In addition, the terminal device 100 generates zero-knowledge proof information 152 (zero-knowledge proof information $\pi_{hidden}$) indicating that the prover knows the values of the three hidden items used for the commitment 151. The zero-knowledge proof information 152 is a set of numerical values generated from the values of the hidden items with a particular algorithm. The zero-knowledge proof does not involve sending the values themselves of the hidden items. If the prover does not know the values of the hidden items, it is probabilistically very difficult to cause the terminal device 100 to generate the zero-knowledge proof information 152 that is consistent with the commitment 151. Therefore, when a particular verification procedure for the commitment 151 and zero-knowledge proof information 152 has succeeded, it is proved that the prover knows the values of the hidden items.

The terminal device 100 sends the commitment 151, zero-knowledge proof information 152, and value 153 to the terminal device 200. The terminal device 200 inputs the commitment 151 and zero-knowledge proof information 152 to a verification function to determine whether the verification of the zero-knowledge proof information 152 succeeds or fails. The success in the verification of the zero-knowledge proof information 152 means that the prover knows the values of the hidden items used for the commitment 151. The failure in the verification of the zero-knowledge proof information 152 means that there is a possibility that the prover does not know the values of the hidden items used for the commitment 151.

In addition, the terminal device 200 converts the received value 153 to a commitment. In the case where the value 153 is true, the generated commitment is equal to the commitment 145. The terminal device 200 computes the product of the received commitment 151 and the commitment obtained by converting the value 153. Then, the terminal device 200 compares the computed product with the commitment 141 registered in the blockchain. If the computed product is equal to the commitment 141, it means a success in the commitment verification. If the computed product is not equal to the commitment 141, it means a failure in the commitment verification.

In the case where the commitment verification has succeeded and the knowledge verification of the hidden items has succeeded, the terminal device 200 determines that the received value 153 is true. However, in the case where at least one of the commitment verification and the knowledge verification of the hidden items has failed, the terminal device 200 determines that there is a possibility that the received value 153 has been tampered with. In this connection, the terminal device 200 may perform either the commitment verification or the knowledge verification of the hidden items first. In addition, in the case where one of the two verifications has failed, the terminal device 200 does not need to perform the other verification.

Assume now the case where the value 153 is a tampered version of a value included in the original transaction data. If the commitment 151 is not modified according to the tampering, the product of the commitment 151 and a commitment obtained by converting the value 153 is not equal to the commitment 141 registered in the blockchain. This means that the terminal device 200 fails in the commitment verification. Even if the commitment 151 is modified so that such a product is equal to the commitment 141, the terminal device 100 is not able to compute back the values of the hidden items that produce the commitment 151, because of the unidirectionality of commitments. For this reason, the terminal device 100 is not able to generate the zero-knowledge proof information 152 that is consistent with the commitment 151, so that the terminal device 200 fails in the knowledge proof of the hidden items. In the manner described above, the authenticity of the value 153 is indirectly confirmed through the commitment verification and the knowledge verification of the hidden items.

In the above example, the terminal device 100 reveals the value of a specific item to the terminal device 200 for proving a certain fact. In addition, the terminal device 100 is able to prove that the value of a certain item satisfies a certain condition using the zero-knowledge proof technology, without revealing the value itself. Examples of such a proof include a range proof, which proves that a value belongs to a certain range, and a set membership proof, which proves that a value is an element of a certain set.

FIG. 6 illustrates an example of data that is used in a range proof of a hidden item.

In this example, the terminal device 100 conceals the first value, second value, and third value among the four values included in the transaction data, and sends the fourth value to the terminal device 200. In addition, the terminal device 100 proves to the terminal device 200 that the third value belongs to a certain range. The example here relates to a range proof, but the same applies to a set membership proof. In addition, the fourth value is revealed to the terminal device 200, but none of the four values included in the transaction data may be revealed to the terminal device 200.

First, the terminal device 100 converts each of the four values included in the transaction data to a commitment, thereby generating commitments 142 to 145. The terminal device 100 computes the product of the commitments 142 to 145 as a commitment 141. The terminal device 100 registers the commitment 141 in a blockchain.

Then, with respect to the third item that is a target in the range proof, the terminal device 100 generates zero-knowledge proof information 154 (zero-knowledge proof information $\pi_{range}$) indicating that the value used for the commitment 144 belongs to the certain range. The zero-knowledge proof information 154 is a set of numerical values generated from the value of the third item and range information according to a particular algorithm. The range proof does not involve sending the value itself of an item that is a proof target. If the value used for the commitment 144 does not belong to the certain range, the zero-knowledge proof information 154 that is consistent with the commitment 144 is not generated. Therefore, when a particular verification procedure for the commitment 144 and zero-knowledge proof information 154 has succeeded, it is proved that the value belongs to the certain range.

In addition, with respect to the remaining hidden items that are not targets in the range proof among the three hidden items, the terminal device 100 computes the product of the commitments 142 and 143 as a commitment 155 (commitment $C_{hidden}$). Then, the terminal device 100 generates zero-knowledge proof information 152 indicating that the prover knows the values of the three hidden items. In this connection, the commitment 155 depends on the value of the first item and the value of the second item, whereas the zero-knowledge proof information 152 depends on the value of the first item, the value of the second item, and the value of the third item.

The terminal device 100 sends the commitments 144 and 155, zero-knowledge proof information 152 and 154, and value 153 to the terminal device 200. The terminal device 200 inputs the commitment 144 and zero-knowledge proof information 154 to a verification function to determine whether the verification of the zero-knowledge proof information 154 succeeds or fails. The success in the verification of the zero-knowledge proof information 154 means that the value used for the commitment 144 belongs to the certain range. The failure in the verification of the zero-knowledge proof information 154 means that there is a possibility that the value used for the commitment 144 does not belong to the certain range.

In addition, the terminal device 200 computes the product of the received commitments 144 and 155. In the case where the commitments 144 and 155 are true, the product of them is equal to the above-described commitment 151. The terminal device 200 inputs the computed product and zero-knowledge proof information 152 to the verification function to determine whether the verification of the zero-knowledge proof information 152 succeeds or fails. In addition, the terminal device 200 converts the received value 153 to a commitment. The terminal device 200 computes the product of the commitments 144 and 155 and the commitment obtained by converting the value 153, and compares the product with the commitment 141 registered in the blockchain.

In the case where the above three verifications have succeeded, the terminal device 200 determines that the received value 153 is true and that the value that is a target in the range proof belongs to the certain range. The success in the above three verifications means that the prover knows the value that is a target in the range proof, that the value belongs to the certain range, and that the value has not been tampered with. In the case where any of the above three verifications has failed, however, the terminal device 200 determines that there is a possibility that the received value 153 has been tampered with or the range proof has failed.

In this connection, the terminal device 200 may perform the above three verifications in any order. In addition, in the case where any one of the verifications has failed, the terminal device 200 does not need to perform the remaining verifications. In the case where there is no revealed item, the terminal device 200 may just compare the product of the commitments of the hidden items with the commitment 141 registered in the blockchain.

FIG. 7 illustrates an example of computing the products of commitments.

The following describes the products of commitments computed in the proof example of FIG. 6. As described above, the terminal device 200 applies the zero-knowledge proof information 154 to the commitment 144 in a verification for the range proof to prove that the value of the third item belongs to the certain range. Then, the terminal device 200 computes the product of the commitment 155 and the commitment 144. This product corresponds to the product of the commitments 142, 143, and 144. The terminal device 200 applies the zero-knowledge proof information 152 to the product of the commitments 142, 143, and 144 in a verification for the knowledge proof to prove that the prover knows the values of the hidden items.

Then, the terminal device 200 converts the value 153 to the commitment 145, and computes the product of the commitments used for the knowledge proof and the commitment 145. This product corresponds to the product of the commitments 142, 143, 144, and 145. The terminal device 200 compares the product of the commitments 142, 143, 144, and 145 with the commitment 141 registered in the blockchain to verify the authenticity.

The following describes a specific example of the above proofs from the mathematical aspects. First, with respect to vectors a and b each containing numerical values as elements, the product of the vectors a and b is defined as Equation (1). The product of the vectors a and b is a vector obtained by multiplying elements $a_i$ and $b_i$ for each dimension. In addition, the b-th power of a is defined as Equation (2). The b-th power of a is a scalar value that is obtained by computing the $b_i$-th power of $a_i$ for each dimension and computing the product of all dimensions. In addition, the inner product of the vectors a and b is defined as Equation (3). The inner product of the vectors a and b is a scalar value that is obtained by multiplying $a_i$ and $b_i$ for each dimension and summing the resulting products of all dimensions.

$$\boldsymbol{a} \cdot \boldsymbol{b} = \{a_1 \cdot b_1,\ a_2 \cdot b_2,\ \cdots,\ a_n \cdot b_n\} \tag{1}$$

$$\boldsymbol{a}^{\boldsymbol{b}} = \prod_{i=1}^{n} a_i^{b_i} = a_1^{b_1} \cdot a_2^{b_2} \cdots a_n^{b_n} \tag{2}$$

$$<\boldsymbol{a},\boldsymbol{b}>=\sum_{i=1}^{n}a_i\cdot b_i=a_1\cdot b_1+a_2\cdot b_2+\cdots+a_n\cdot b_n \quad (3)$$

The database server 41 defines a parameter group given by Equation (4). This parameter group is public information that is public to the terminal devices 100 and 200. The parameter group includes p, n' pieces of g, n' pieces of h, and u.

$$\textbf{params}=\{p,g_1,g_2,\cdots,g_{n'},h_1,h_2,\cdots,h_{n'},u\} \quad (4)$$
$$\text{where } g_i,h_i,u\in\mathbb{G}_{\mathrm{q}},\ 2^{\lambda-1}\leq q\leq 2^{\lambda}$$

The database server 41 receives a security parameter λ from an administrator of the information processing system, and selects a prime number q satisfying the condition given in Equation (4) on the basis of λ. The database server 41 generates a group $G_q$ whose order is the prime number q, and selects $g_i$, $h_i$, and u from the group $G_q$. For example, the group $G_q$ is a set of natural numbers less than q. n' is an integer greater than or equal to the maximum value of the items that are able to be included in the transaction data, and is set by the administrator. In addition, the database server 41 selects a prime number p.

In the case where the transaction data contains n items, the terminal device 100 generates vectors g and h given by Equation (5) on the basis of the above parameters. The vector g is a vector containing n pieces of $g_i$ included in the parameter group in ascending order of subscripts. The vector h is a vector containing n pieces of $h_i$ included in the parameter group in ascending order of subscripts.

$$\boldsymbol{g}=\{g_1,g_2,\cdots,g_n\},\ \boldsymbol{h}=\{h_1,h_2,\cdots,h_n\} \quad (5)$$

In addition, the terminal device 100 generates a set $Z_p$ whose order is the prime number p, and selects n random numbers from the set $Z_p$. For example, the set $Z_p$ is a set of natural numbers less than p. The prime number p may be the same as the prime number q, and the set $Z_p$ may be the same as the group $G_q$. The terminal device 100 generates a vector r containing the n random numbers, as given by Equation (6).

$$\boldsymbol{r}=\{r_1,r_2,\cdots,r_n\}\ \text{ where } r_i\in\mathbb{Z}_{\mathrm{p}} \quad (6)$$

The terminal device 100 generates a vector v containing the values included in the transaction data in ascending order of item number. Then, the terminal device 100 generates a commitment C to be registered in the blockchain, on the basis of the vectors g, h, v, and r, as given by Equation (7). The commitment C is the product of the v-th power of g and the r-th power of h. From the definitions of the above-described power and product, the commitment C is also generated by computing the product of the $V_i$-th power of $g_i$ and the $r_i$-th power of $h_i$ as a commitment for each item and multiplying the commitments of the n items.

$$C=\boldsymbol{g}^{\boldsymbol{v}}\cdot\boldsymbol{h}^{\boldsymbol{r}}=\prod_{i=1}^{n}\left(g_i^{v_i}\cdot h_i^{r_i}\right)=g_1^{v_1}\cdot h_1^{r_1}\cdot g_2^{v_2}\cdot h_2^{r_2}\cdots g_n^{v_n}\cdot h_n^{r_n} \quad (7)$$

The terminal device 100 registers the commitment C in association with the transaction ID in the blockchain. In addition, the terminal device 100 stores the vector r as confidential information. It is difficult to deduce the vectors v and r from the commitment C.

In the case where the terminal device 100 sends proof information to the terminal device 200, the terminal device 100 receives the designation of a revealed item, a range proof item, and a set membership proof item from the prover who has the knowledge of transaction data. In this connection, no revealed item may be designated. Likewise, no range proof item may be designated, and no set membership proof item may be designated. In the case where a range proof item is designated, the minimum and maximum values of a range are also designated by the prover. In the case where a set membership proof item is designated, a set of candidate values is also designated by the prover.

The terminal device 100 generates a commitment $C_{\mathrm{hidden}}$ given by Equation (8) on the basis of the vectors g, h, v, and r and parameter u. The vector v' is obtained by removing the value of the revealed item from the vector v and contains the values of the hidden items. The vector r' is obtained by removing the random number for the revealed item from the vector r and contains the random numbers for the hidden items. Auxiliary information c is the inner product of the vectors v' and r'. The commitment $C_{hidden}$ corresponds to the product of the commitments of the hidden items and a correction factor $u^c$.

$$C_{\text{hidden}} = u^c \cdot \prod_{i=1}^{m} (g_i^{v_i} \cdot h_i^{r_i}) \quad \text{where } c = <\boldsymbol{v'}, \boldsymbol{r'}> \tag{8}$$

Then, the terminal device 100 generates zero-knowledge proof information $\pi_{hidden}$ corresponding to the commitment $C_{hidden}$ with a function ProveInnerProduct, as given by Equation (9). The function ProveInnerProduct generates the zero-knowledge proof information $\pi_{hidden}$ that is a set of numerical values, using the vectors v' and r' used for the commitment $C_{hidden}$. The zero-knowledge proof information $\pi_{hidden}$ is information to prove that the prover knows all of the values of the hidden items used for the above commitment $C_{hidden}$ and the random numbers for the hidden items.

$$\pi_{\text{hidden}} = \text{ProveInnerProduct}(\boldsymbol{v'}, \boldsymbol{r'}) \tag{9}$$

Then, in the case where there exists any range proof item, the terminal device 100 generates a commitment $C_{range,j}$ for each range proof item, as given by Equation (10). The commitment $C_{range,j}$ is the commitment of a range proof item j and is the product of the $v_j$-th power of $g_j$ and the $r_j$-th power of $h_j$.

$$C_{\text{range},j} = g_j^{v_j} \cdot h_j^{r_j} \tag{10}$$

In the case where there exists any range proof item, the terminal device 100 also generates zero-knowledge proof information $\pi_{range,j}$ corresponding to the commitment $C_{range,j}$ with a function ProveRangeProof, as given by Equation (11). The function ProveRangeProof generates the zero-knowledge proof information $\pi_{range,j}$ that is a set of numerical values, using $v_j$ and $r_j$ used for the commitment $C_{range,j}$ and the minimum value $min_j$ and maximum value $max_j$ of the range. The zero-knowledge proof information $\pi_{range,j}$ is information to prove that $v_j$ is within the range of the minimum value $min_j$ and maximum value $max_j$, inclusive.

$$\pi_{\text{range},j} = \text{ProveRangeProof}(v_j, r_j, \min_j, \max_j) \tag{11}$$

Then, in the case where there exists any set membership proof item, the terminal device 100 generates a commitment $C_{set,k}$ for each set membership proof item, as given by Equation (12). The commitment $C_{set,k}$ is the commitment of the set membership proof item k.

$$C_{\text{set},k} = g_k^{v_k} \cdot h_k^{r_k} \tag{12}$$

In the case where there exists any set membership proof item, the terminal device 100 also generates zero-knowledge proof information $\pi_{set,k}$ corresponding to the commitment $C_{set,k}$ with a function ProveSetProof, as given by Equation (13). The function ProveSetProof generates the zero-knowledge proof information $\pi_{set,k}$ that is a set of numerical values, using $v_k$ and $r_k$ used for the commitment $C_{set,k}$ and a set $set_k$ of candidate values. The zero-knowledge proof information $\pi_{set,k}$ is information to prove that $v_k$ used for the commitment $C_{set,k}$ is included in the set $set_k$.

$$\pi_{\text{set},k} = \text{ProveSetProof}(v_k, r_k, \mathbf{set}_k) \tag{13}$$

Then, in the case where there exists any range proof item, the terminal device 100 deducts the commitment $C_{range,j}$ of each range proof item from the above-described commitment $C_{hidden}$. The terminal device 100 divides $C_{hidden}$ by $C_{range,j}$. In addition, in the case where there exists any set membership item, the terminal device 100 deducts the commitment $C_{range,k}$ of each set membership proof item from the above-described commitment $C_{hidden}$. The terminal device 100 divides $C_{hidden}$ by $C_{range,j}$. By doing so, the commitment $C_{hidden}$ is modified as given by Equation (14). In this connection, the terminal device 100 may be designed to generate the commitment $C_{hidden}$ by computing the product of the commitments of all hidden items but the range proof items and set membership proof items.

$$C_{\text{hidden}} = \frac{C_{\text{hidden}}}{C_{\text{range}} \cdot C_{\text{set}}} = \frac{C_{\text{hidden}}}{\prod_j C_{\text{range},j} \cdot \prod_k C_{\text{set},k}} \tag{14}$$

The terminal device 100 sends the proof information to the terminal device 200. The proof information includes the transaction ID identifying the transaction data, the commitment $C_{hidden}$, the zero-knowledge proof information $\pi_{hidden}$, and the auxiliary information c. In the case where there exists a revealed item, the proof information further includes the value $v_{rev}$ of the revealed item and the random number $r_{rev}$ for the revealed item. In the case where there exists any range proof item, the proof information further includes the commitment $C_{range,j}$, the zero-knowledge proof information $\pi_{range,j}$, the minimum value $min_j$, and the maximum value $max_j$. In the case where there exists any set membership item, the proof information further includes the commitment $C_{set,k}$, the zero-knowledge proof information $\pi_{set,k}$, and the set $set_k$ of candidate values. In this connection, the proof information may include the commitment C.

The terminal device 200 receives the proof information from the terminal device 100. Then, the terminal device 200 reads a commitment C corresponding to the transaction ID from the blockchain.

Then, in the case where there exists any range proof item, the terminal device 200 verifies the zero-knowledge proof information $\pi_{range,j}$ with a function VerifyRangeProof as given by Equation (15) . The function VerifyRangeProof generates a verification result $proof_{range,j}$ on the basis of the commitment $C_{range,j}$, the zero-knowledge proof information $\pi_{range,j}$, the minimum value $min_j$, and the maximum value $max_j$. The verification result $proof_{range,j}$ is a flag that indicates true or false. The flag $proof_{range,j}$ = true indicates a verification success that the value of the range proof item belongs to a certain range. The flag $proof_{range,j}$ = false indicates a verification failure that it is not certain that the value of the range proof item belongs to the certain range.

$$\text{proof}_{\text{range,j}} = \text{VerifyRangeProof}(C_{\text{range},j}, \pi_{\text{range},j}, \min_j, \max_j) \tag{15}$$

Then, in the case where there exists any set membership proof item, the terminal device 200 verifies the zero-knowledge proof information $\pi_{set,k}$ with a function VerifySetProof as given by Equation (16). The function VerifySetProof generates a verification result $proof_{set,k}$ on the basis of the commitment $C_{set,k}$, the zero-knowledge proof information $\pi_{set,k}$, and the set $set_k$. The verification result $proof_{set,k}$ is a flag that indicates true or false. The flag $proof_{set,k}$ = true indicates a verification success that the value of the set membership proof item is included in the set $set_k$. The flag $proof_{set,k}$ = false indicates a verification failure that it is not certain that the value of the set membership proof item is included in the set $set_k$.

$$\text{proof}_{\text{set,k}} = \text{VerifySetProof}(C_{\text{set},k}, \pi_{\text{set},k}, \mathbf{set}_k) \tag{16}$$

Then, in the case where there exists any range proof item, the terminal device 200 also multiplies the received commitment $C_{hidden}$ by the commitment $C_{range,j}$ of each range proof item. In addition, in the case where there exists any set membership proof item, the terminal device 200 also multiplies the received commitment $C_{hidden}$ by the commitment $C_{set,k}$ of each set membership proof item. By doing so, the commitment $C_{hidden}$ is modified as given by Equation (17).

$$C_{\text{hidden}} = C_{\text{hidden}} \cdot C_{\text{range}} \cdot C_{\text{set}} \tag{17}$$

Then, the terminal device 200 verifies the zero-knowledge proof information $\pi_{hidden}$ with a function VerifyInner-Product as given by Equation (18). The function VeirfyInnerProduct generates a verification result $proof_{hidden}$ on the basis of the modified commitment $C_{hidden}$ and the received zero-knowledge proof information $\pi_{hidden}$. The verification result $proof_{hidden}$ is a flag that indicates true or false. The flag $proof_{hidden}$ = true indicates a verification success that the prover knows all of the values of the hidden items and the random numbers for the hidden items. The flag $proof_{hidden}$ = false indicates a verification failure that it is not certain that the prover knows all of the values of the hidden items and the random numbers for the hidden items.

$$\mathrm{proof}_{\mathrm{hidden}} = \mathrm{VerifyInnerProduct}(C_{\mathrm{hidden}}, \pi_{\mathrm{hidden}}) \tag{18}$$

Then, in the case where there exists a revealed item, the terminal device 200 generates a commitment $C_{rev}$ of the revealed item from the received value $v_{rev}$ of the revealed item and the random number $r_{rev}$ for the revealed item. Then, the terminal device 200 computes the product of the commitments $C_{hidden}$ and $C_{rev}$ and a correction factor $u^{-c}$, as given by Equation (19), and then compares the product with the commitment C registered in the blockchain. The multiplication by the correction factor $u^{-c}$ is to eliminate the correction factor $u^c$ of Equation (8). If the computed product is equal to the commitment C, it means a success in the commitment verification. If the computed product is not equal to the commitment C, it means a failure in the commitment verification.

$$C = C_{\mathrm{hidden}} \cdot C_{\mathrm{rev}} \cdot u^{-c} = C_{\mathrm{hidden}} \cdot \prod_{i=\mathrm{rev}} (g_i^{v_i} \cdot h_i^{r_i}) \cdot u^{-c} \tag{19}$$

In this connection, the commitments used as above may be called Pedersen commitments. For the Pedersen commitment, see, for example, the following document: Torben Pryds Pedersen, "Non-Interactive and Information-Theoretic Secure Verifiable Secret Sharing", Proceedings of the 11th Annual International Cryptology Conference (CRYPTO '91), pp. 129-140, August 11, 1991.

Further, the above description uses the zero-knowledge proof for the product of commitments. For the zero-knowledge proof for the product of commitments, see, for example, the following document: Benedikt Bunz, Jonathan Bootle, Dan Boneh, Andrew Poelstra, Pieter Wuille and Greg Maxwell, "Bulletproofs: Short Proofs for Confidential Transactions and More", Proceedings of the 2018 IEEE Symposium on Security and Privacy, pp. 315-334, May 21, 2018.

Still further, for the set membership proof, see, for example, the following document: Daniel Benarroch, Matteo Campanelli, Dario Fiore, Kobi Gurkan and Dimitris Kolonelos, "Zero-Knowledge Proofs for Set Membership: Efficient, Succinct, Modular" Cryptology ePrint Archive, Report 2019/1255, October 27, 2019.

As described above, with respect to the product of the commitments of two or more hidden items, the terminal device 100 generates single zero-knowledge proof information to prove that the prover has the knowledge of the values of the two or more hidden items. Therefore, as compared with the case of sending a commitment and zero-knowledge proof information for each hidden item, the terminal device 100 is able to reduce the data volume of the proof information. For example, the terminal device 100 is able to reduce the data volume of zero-knowledge proof information to $21og_2(2m)+9$ for m hidden items.

By collectively performing a knowledge proof of two or more values, it is possible to perform a verification with a small data volume efficiently. Especially, the use of the correction factor $u^c$ in the commitment $C_{hidden}$ streamlines the verification and reduces the data volume. As a result, as compared with the case of generating zero-knowledge proof information for each hidden item, the data volume of the zero-knowledge proof information is reduced from O(m) to $O(\log_2 m)$.

The following describes the functions and processing procedures of the information processing system according to the second embodiment.

FIG. 8 is a block diagram illustrating an example of functions of the information processing system.

The database server 41 includes a parameter generation unit 411, a parameter storage unit 412, and a blockchain storage unit 413. The parameter storage unit 412 and blockchain storage unit 413 are implemented by using a storage space of a RAM or HDD, for example. The parameter generation unit 411 is implemented by using a CPU and programs, for example.

The parameter generation unit 411 receives a security parameter $\lambda$ from the administrator of the information processing system. For the security purpose, the security parameter $\lambda$ may be changed periodically. The parameter generation unit 411 generates the above-described parameter group on the basis of the received security parameter $\lambda$, and stores the parameter group as public information in the parameter storage unit 412.

The parameter storage unit 412 stores therein the parameter group including the above-described p, $g_i$, $h_i$, and u as the public information. The terminal devices 100 and 200 are able to read the parameter group from the parameter storage unit 412. The blockchain storage unit 413 stores therein a blockchain of the above-described structure. The database server 42 stores the same blockchain as the database server 41 as well. The terminal device 100 is able to register a commitment in association with a transaction ID in the blockchain. The terminal device 200 is able to read a commitment corresponding to a certain transaction ID from the blockchain.

The terminal device 100 includes a blockchain registration unit 121, a transaction data storage unit 122, a proof information generation unit 123, and a proof information storage unit 124. The transaction data storage unit 122 and proof information storage unit 124 are implemented by using a storage space of the RAM 102 or HDD 103, for example.

The blockchain registration unit 121 and proof information generation unit 123 are implemented by using the CPU 101 and programs.

The blockchain registration unit 121 reads the parameter group from the database server 41. The blockchain registration unit 121 generates random numbers and generates the above-described commitment C from the transaction data stored in the transaction data storage unit 122 and the random numbers. The blockchain registration unit 121 registers the transaction ID and commitment C in the blockchain. In addition, the blockchain registration unit 121 stores the generated random numbers in the transaction data storage unit 122.

The transaction data storage unit 122 stores therein transaction data held by the prover. The transaction data is given a transaction ID. In addition, the transaction data storage unit 122 stores therein the random numbers as confidential information. The transaction data storage unit 122 may store therein the commitment C.

The proof information generation unit 123 generates the above-described proof information in response to a request from the prover, and stores the generated proof information in the proof information storage unit 124. In addition, the proof information generation unit 123 sends the generated proof information to the terminal device 200.

At this time, the proof information generation unit 123 receives the designation of a revealed item, a range proof item, and a set membership proof item from the prover. The proof information generation unit 123 reads the transaction data and random numbers from the transaction data storage unit 122 and also reads the parameter group from the database server 41. The proof information generation unit 123 generates a commitment and zero-knowledge proof information for the knowledge proof of the hidden items, a commitment and zero-knowledge proof information for the range proof, and a commitment and zero-knowledge proof information for the set membership proof.

The proof information storage unit 124 stores therein the generated proof information. The proof information may be deleted from the proof information storage unit 124 after being sent to the terminal device 200.

The terminal device 200 includes a verification unit 221 and a verification result storage unit 222. The verification result storage unit 222 is implemented by using a RAM or HDD, for example. The verification unit 221 is implemented by using a CPU and programs, for example.

The verification unit 221 receives the proof information from the terminal device 100 and reads the parameter group from the database server 41. The verification unit 221 verifies the proof information and stores the verification result in the verification result storage unit 222. In addition, the verification unit 221 displays the verification result on a display device. The verification result is expressed as "valid" indicating a verification success or "invalid" indicating a verification failure. In the case of the verification failure, the verification result may include information on the cause of the failure. In the case of the verification success, the verification result may include the value of the revealed item, the range information of the range proof, and the set information of the set membership proof.

At this time, the verification unit 221 verifies using the commitment and zero-knowledge proof information for the range proof that the value of the range proof item belongs to a certain range. In addition, the verification unit 221 verifies using the commitment and zero-knowledge proof information for the set membership proof that the value of the set membership proof item is included in a certain set. Still further, the verification unit 221 verifies using the commitment and zero-knowledge proof information for the knowledge proof that the prover knows the values of the hidden items. Then, the verification unit 221 reads a commitment C corresponding to the transaction ID from the database server 41 and determines whether the commitment C is equal to the commitment derived from the proof information.

The verification result storage unit 222 stores therein the generated verification result. The verification result may be deleted from the verification result storage unit 222 after the verifier confirms the verification result.

FIG. 9 illustrates an example of data stored in a database server and terminal device.

In the following, the same symbols as used in the above-described Equations are used to describe various data. The parameter storage unit 412 stores therein a parameter group. The parameter group includes p, $g_1, ..., g_{n'}$, $h_1, ..., h_{n'}$, and u. The blockchain storage unit 413 stores therein a transaction ID and a commitment C in association with each other. The transaction data storage unit 122 stores therein the transaction ID and transaction data. The transaction data includes values $v_1, ..., v_n$ corresponding to n items. In addition, the transaction data includes the item numbers and item names of the n items. In addition, the transaction data storage unit 122 stores therein random numbers $r_1, ..., r_n$ corresponding to the n items.

The proof information storage unit 124 stores therein proof information. The proof information includes a transaction ID, a commitment $C_{hidden}$, zero-knowledge proof information $\pi_{hidden}$, and auxiliary information c. In the case where there exists a revealed item, the proof information includes the value $v_{rev}$ of the revealed item and the random number $r_{rev}$ for the revealed item. In the case where there exists a range proof item, the proof information includes a commitment $C_{range,j}$, zero-knowledge proof information $\pi_{range,j}$, a minimum value $min_j$, and a maximum value $max_j$. In the case where there exists a set membership proof item, the proof information includes a commitment $C_{set,k}$, zero-knowledge proof information $\pi_{set,k}$, and a set $set_k$.

FIG. 10 is a flowchart illustrating a proof information generation procedure.

(S10) The blockchain registration unit 121 obtains a public parameter group.

(S11) The blockchain registration unit 121 generates random numbers the number of which is equal to the number of items included in transaction data, on the basis of the obtained parameter group.

(S12) The blockchain registration unit 121 generates a commitment from each value included in the transaction data, and generates the product of the generated commitments as a commitment C. The blockchain registration unit 121 sends the transaction ID and commitment C to the database server 41 to register them in a blockchain. In addition, the blockchain registration unit 121 stores the random numbers generated at step S11 as confidential information.

(S13) The proof information generation unit 123 receives, from the prover, the designation of a revealed item, a range proof item, and a set membership proof item among the plurality of items included in the transaction data. The proof information generation unit 123 further receives the designation of the minimum value and maximum value of a numerical range with respect to the range proof item, and further receives the designation of a set of candidate values with respect to the set membership proof item.

(S14) The proof information generation unit 123 generates auxiliary information c from the values and random numbers of the hidden items, and generates a commitment $C_{hidden}$ from the values and random numbers of the hidden items and the auxiliary information c.

(S15) The proof information generation unit 123 generates zero-knowledge proof information $\pi_{hidden}$ for the commitment $C_{hidden}$ from the values and random numbers of the hidden items. The zero-knowledge proof information $\pi_{hidden}$ is information to prove that the prover knows all of the values and random numbers of the hidden items.

(S16) In the case where there exists a range proof item, the proof information generation unit 123 generates a commitment $C_{range,j}$ from the value and random number of the range proof item j.

(S17) In the case where the range proof item exists, the proof information generation unit 123 generates zero-knowledge proof information $\pi_{range,j}$ for the commitment $C_{range,j}$ from the value and random number of the range proof item j and the minimum value and maximum value of the range. The zero-knowledge proof information $\pi_{range,j}$ is information to prove that the value of the range proof item belongs to a numerical value range defined by the minimum value and maximum value.

(S18) In the case where there exists a set membership proof item, the proof information generation unit 123 generates a commitment $C_{set,k}$ from the value and random number of the set membership proof item k.

(S19) In the case where the set membership proof item exists, the proof information generation unit 123 generates zero-knowledge proof information $\pi_{set,k}$ for the commitment $C_{set,k}$ from the value and random number of the set membership proof item k and the set of candidate values. The zero-knowledge proof information $\pi_{set,k}$ is information to prove that the value of the set membership proof item is included in the designated set.

(S20) The proof information generation unit 123 divides the commitment $C_{hidden}$ by the commitment $C_{range,j}$ of the range proof item j and the commitment $C_{set,k}$ of the set membership proof item k to deduct the commitments $C_{range,j}$ and $C_{set,k}$ from the commitment $C_{hidden}$. In this connection, the deduction of the commitment $C_{range,j}$ may be performed at step S16 or step S17. The deduction of the commitment $C_{set,k}$ may be performed at step S18 or step S19.

(S21) The proof information generation unit 123 generates proof information including the transaction ID, auxiliary information c, the commitments $C_{hidden}$, $C_{range,j}$, and $C_{set,k}$, the zero-knowledge proof information $\pi_{hidden}$, $\pi_{range,j}$, $\pi_{set,k}$, the value of the revealed item, the random number of the revealed item, the minimum value, the maximum value, and the set of candidate values. The proof information generation unit 123 sends the proof information to the terminal device 200 of the verifier. In this connection, the terminal device 100 and terminal device 200 may communicate with each other, directly or via another information processing apparatus.

FIG. 11 is a flowchart illustrating a proof information verification procedure.

(S30) The verification unit 221 receives proof information from the terminal device 100 of the prover.

(S31) The verification unit 221 accesses the database server 41 to obtain a commitment C corresponding to the transaction ID included in the proof information from the blockchain.

(S32) In the case where there exists a range proof item, the verification unit 221 verifies using the commitment $C_{range,j}$, zero-knowledge proof information $\pi_{range,j}$, minimum value, and maximum value included in the proof information that the value of the range proof item j belongs to a certain numerical range.

(S33) In the case where there exists a set membership proof item, the verification unit 221 verifies using the commitment $C_{set,k}$, zero-knowledge proof information $\pi_{set,k}$, and the set of candidate values included in the proof information that the value of the set membership proof item k is an element of a certain set.

(S34) The verification unit 221 multiplies the commitment $C_{hidden}$ by the commitment $C_{range,j}$ and the commitment $C_{set,ki}$ to modify the commitment $C_{hidden}$.

(S35) The verification unit 221 verifies using the modified commitment $C_{hidden}$ and zero-knowledge proof information $\pi_{hidden}$ that the prover knows all of the values and random numbers of the hidden items.

(S36) In the case there exists a revealed item, the verification unit 221 generates the commitment $C_{rev}$ of the revealed item from the value and random number of the revealed item included in the proof information. The verification unit 221 then multiplies the commitment $C_{hidden}$ by the commitment $C_{rev}$ and correction factor $u^{-c}$.

(S37) The verification unit 221 compares the product of the commitments obtained at step S36 with the commitment C registered in the blockchain to verify whether they are equal.

(S38) The verification unit 221 determines whether all of the verifications of steps S32, S33, S35, and S37 have succeeded. If all the verifications have succeeded, the process proceeds to step S39. If at least one of the verifications has failed, the process proceeds to step S40.

(S39) The verification unit 221 determines that the content presented by the prover is true. For example, the verification unit 221 determines that the value of the revealed item, the value of the hidden range proof item, or the value of the hidden set membership proof item is true. Then, the process proceeds to step S41.

(S40) The verification unit 221 determines that the content presented by the prover is false. For example, the verification unit 221 determines that the value of the revealed item, the value of the hidden range proof item, or the value of the hidden set membership proof item is not true.

(S41) The verification unit 221 displays the verification result of step S39 or step S40 on a display device connected to the terminal device 200. In the case where the verification result indicates a success and the revealed item exists, the verifier may visually confirm whether the value of the revealed item satisfies a certain condition. When the verifier confirms that the value of a certain item satisfies a certain condition, the verifier may operate the terminal device 200 to perform clerical procedures such as an approval procedure and a settlement procedure.

In the above description, the terminal device 100 registers the commitment C in the blockchain. However, there may be a case where another information processing apparatus registers the commitment C in the blockchain. For example, the database server 41 may register the commitment C in the blockchain.

FIG. 12 is a block diagram illustrating another example of functions of the information processing system.

A modified information processing system includes a database server 41a corresponding to the database server 41, and a terminal device 100a corresponding to the terminal device 100.

The database server 41a includes a parameter generation unit 411, a parameter storage unit 412, a blockchain storage unit 413, and a blockchain registration unit 414. The blockchain registration unit 414 receives a transaction ID and transaction data. Then, the blockchain registration unit 414 generates a commitment C from the transaction data in the same manner as the blockchain registration unit 121, and registers the transaction ID and commitment C in a blockchain. In addition, the blockchain registration unit 414 sends the transaction ID, transaction data, and random numbers used for the commitment C to the terminal device 100a.

The terminal device 100a includes a transaction data storage unit 122, a proof information generation unit 123, a proof information storage unit 124, and a transaction data receiving unit 125. The transaction data receiving unit 125 receives the transaction ID, transaction data, and random numbers from the database server 41a. The transaction data receiving unit 125 stores the transaction ID, transaction data, and random numbers in the transaction data storage unit 122. The database server 41a may additionally send the commitment C to the terminal device 100a.

As described above, in the information processing system according to the second embodiment, a blockchain is used for verifying the authenticity of transaction data. This improves the reliability of information that the prover sends to the verifier. In addition, instead of the transaction data itself, a commitment generated from the transaction data is registered in the blockchain. This prevents the transaction data from being disclosed widely and protects the confidential information included in the transaction data.

In addition, in proving that the value of a specific item in the transaction data satisfies a certain condition, the prover is able to conceal the values of the other items. This reduces the risk of leaking the confidential information included in the transaction data to the verifier. In addition, using the zero-knowledge proof information to prove that the prover knows the values of hidden items, it is proved that the value of the specific item has not been tampered with. This improves the reliability of information that the prover sends to the verifier. In addition, using the range proof and set membership proof that are types of zero-knowledge proof technology, the prover is able to prove that the value of the specific item satisfies the certain condition while concealing the value of the specific item. This further reduces the risk of leaking the confidential information.

In addition, a commitment for all of the plurality of items is defined as the product of the respective commitments of the items. Therefore, the prover is able to generate a commitment for all the items to be compared against a blockchain, from the commitments used in the zero-knowledge proof and the value of the revealed item. This reduces the data volume of the proof information. In addition, to prove the knowledge of the values of two or more hidden items, a single commitment and single zero-knowledge proof information are used. Therefore, the prover is able to generate zero-knowledge proof information with a data volume of $O(\log_2 m)$ for m hidden items, which means reducing the data volume, as compared with the case of generating zero-knowledge proof information for each item.

The above description is merely indicative of the principles of the present embodiments. A wide variety of modifications and changes may also be made by those skilled in the art. The present embodiments are not limited to the precise configurations and example applications indicated and described above, and all appropriate modifications and equivalents are regarded as falling within the scope of the embodiments as defined by the appended patent claims and their equivalents.

Reference Signs List

10, 20: Information processing apparatus
11: Storage unit
12, 22: Processing unit
13, 21: Communication unit
14: Data
15a, 15b, 16: Item value
17, 23, 31: Commitment
18: Zero-knowledge proof information
30: Database

## Claims

**1.** An information processing system comprising:

a first information processing apparatus; and
a second information processing apparatus,
wherein the first information processing apparatus is configured to

generate a first commitment by obfuscating two or more first item values among a plurality of item values included in data, and generate zero-knowledge proof information from the two or more first item values, the zero-knowledge proof information being used to prove that a user of the first information processing apparatus has knowledge of the two or more first item values, and
send a second item value among the plurality of item values, the generated first commitment, and the generated zero-knowledge proof information to the second information processing apparatus, and

wherein the second information processing apparatus is configured to

generate a second commitment from the received second item value, and
verify authenticity of the received second item value, based on relationship between the first and second commitments and a third commitment stored in a database and the received zero-knowledge proof information.

**2.** The information processing system according to claim 1, wherein

the first information processing apparatus is further configured to generate the second commitment from the second item value, generate the third commitment by computing a product of the first commitment and the second commitment, and register the third commitment in the database, and
in verifying the authenticity, the second information processing apparatus computes a product of the first commitment and the second commitment and compares the computed product with the third commitment stored in the database.

**3.** The information processing system according to claim 1, wherein in verifying the authenticity, the second information processing apparatus determines that the received second item value is true, upon determining that a product of the first commitment and the second commitment is equal to the third commitment and that a proof using the zero-knowledge proof information has succeeded.

**4.** The information processing system according to claim 1, wherein in generating the first commitment, the first information processing apparatus generates two or more fourth commitments respectively by obfuscating the two or more first item values, and generates the first commitment by computing a product of the generated two or more fourth commitments.

**5.** The information processing system according to claim 1, wherein

the first information processing apparatus is further configured to generate a fifth commitment by obfuscating a third item value among the two or more first item values, and generate another zero-knowledge proof information from the third item value, the other zero-knowledge proof information being used to prove that the third item value satisfies a certain condition,
in sending to the second information processing apparatus, the first information processing apparatus further sends the fifth commitment and the other zero-knowledge proof information, and
in verifying the authenticity, the second information processing apparatus verifies the authenticity of the second item value, verifies that the third item value satisfies the certain condition, and verifies authenticity of the third item value, based on relationship between the first, second, and fifth commitments and the third commitment, the received zero-knowledge proof information, and the received other zero-knowledge proof information.

**6.** An information processing system comprising:

a first information processing apparatus; and
a second information processing apparatus,
wherein the first information processing apparatus is configured to

generate a first commitment by obfuscating two or more first item values among a plurality of item values included in data, and generate first zero-knowledge proof information from the two or more first item values, the first zero-knowledge proof information being used to prove that a user of the first information processing apparatus has knowledge of the two or more first item values,
generate a second commitment by obfuscating a second item value among the plurality of item values, and generate second zero-knowledge proof information from the second item value, the second zero-knowledge proof information being used to prove that the second item value satisfies a certain condition, and
send the generated first commitment, the generated first zero-knowledge proof information, the generated second commitment, and the generated second zero-knowledge proof information to the second information processing apparatus, and

wherein the second information processing apparatus is configured to
verify that the second item value satisfies the certain condition and verify authenticity of the second item value, based on relationship between the first and second commitments and a third commitment stored in a database, the received first zero-knowledge proof information, and the received second zero-knowledge proof information.

**7.** A control method comprising:

generating, by a first information processing apparatus, a first commitment by obfuscating two or more first item values among a plurality of item values included in data, and generating zero-knowledge proof information from the two or more first item values, the zero-knowledge proof information being used to prove that a user of the first information processing apparatus has knowledge of the two or more first item values;
sending, by the first information processing apparatus, a second item value among the plurality of item values, the generated first commitment, and the generated zero-knowledge proof information;
generating, by a second information processing apparatus, a second commitment from the received second item value; and
verifying, by the second information processing apparatus, authenticity of the received second item value, based on relationship between the first and second commitments and a third commitment stored in a database and the received zero-knowledge proof information.

**8.** An information processing apparatus comprising:

a communication unit that receives, from another information processing apparatus, a first commitment corresponding to two or more first item values among a plurality of item values included in data, zero-knowledge proof information for proving that a user of the other information processing apparatus has knowledge of the two or more first item values used for the first commitment, and a second item value among the plurality of item values; and
a processing unit that generates a second commitment from the received second item value, and verifies authenticity of the received second item value, based on relationship between the first and second commitments and a third commitment stored in a database and the received zero-knowledge proof information.

**9.** A control program that causes a computer to perform a process comprising:

receiving, from another computer, a first commitment corresponding to two or more first item values among a plurality of item values included in data, zero-knowledge proof information for proving that a user of the other computer has knowledge of the two or more first item values used for the first commitment, and a second item value among the plurality of item values;
generating a second commitment from the received second item value; and
verifying authenticity of the received second item value, based on relationship between the first and second commitments and a third commitment stored in a database and the received zero-knowledge proof information.

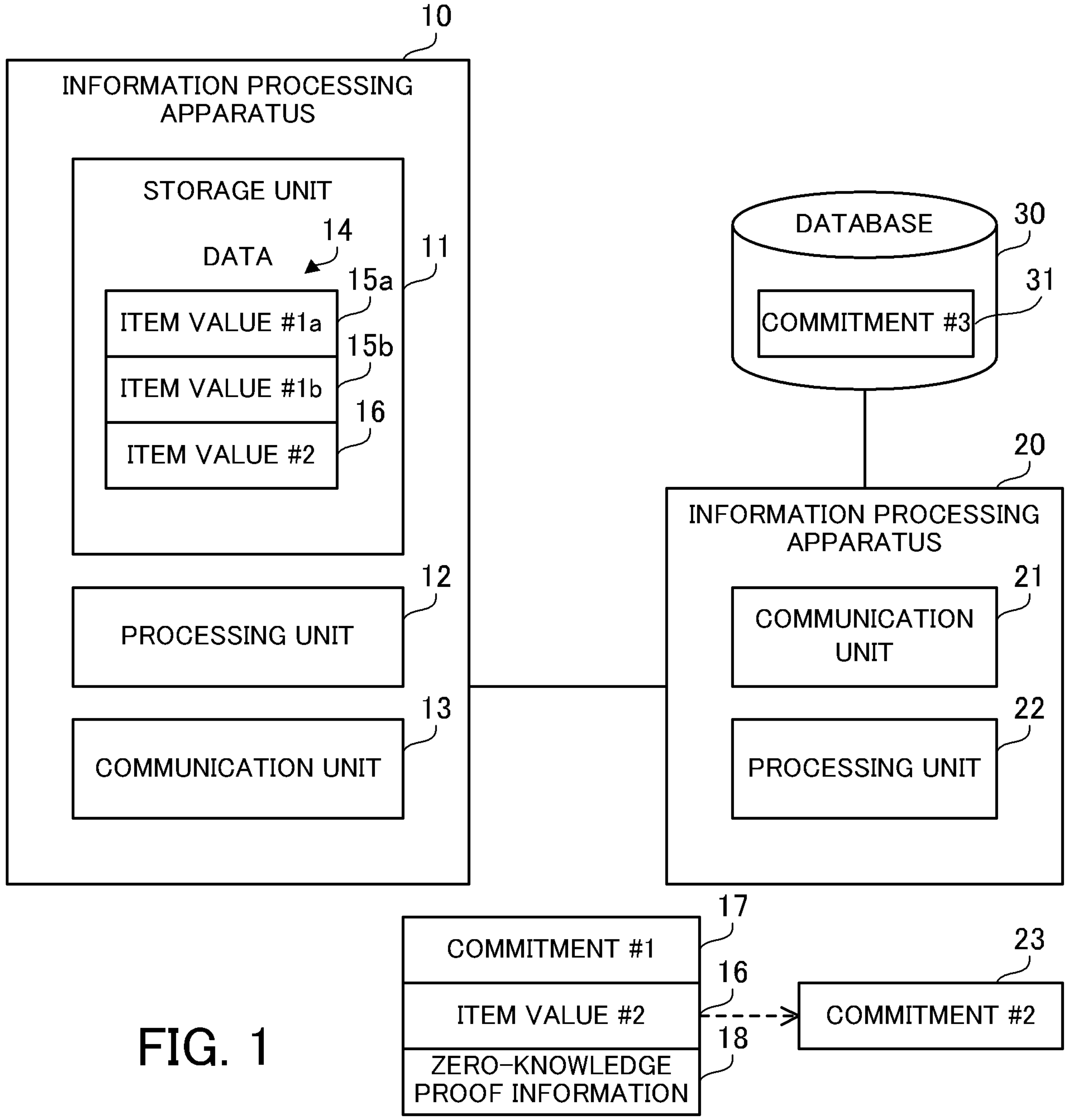
10
INFORMATION PROCESSING APPARATUS
STORAGE UNIT
DATA
14
11
15a
ITEM VALUE #1a
15b
ITEM VALUE #1b
16
ITEM VALUE #2
12
PROCESSING UNIT
13
COMMUNICATION UNIT
DATABASE
30
31
COMMITMENT #3
20
INFORMATION PROCESSING APPARATUS
21
COMMUNICATION UNIT
22
PROCESSING UNIT
17
COMMITMENT #1
16
ITEM VALUE #2
18
ZERO-KNOWLEDGE PROOF INFORMATION
23
COMMITMENT #2

FIG. 1

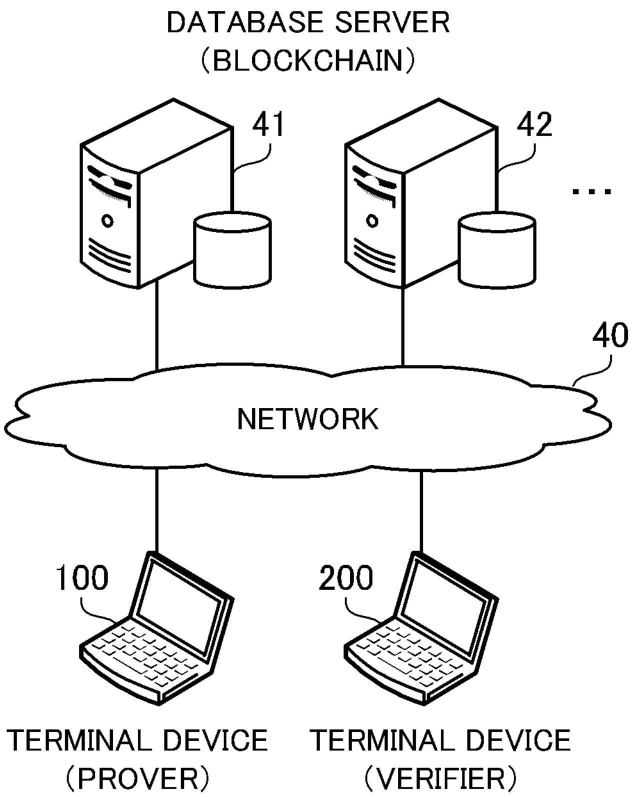
DATABASE SERVER
(BLOCKCHAIN)
41
42
...
40
NETWORK
100
200
TERMINAL DEVICE
(PROVER)
TERMINAL DEVICE
(VERIFIER)

FIG. 2

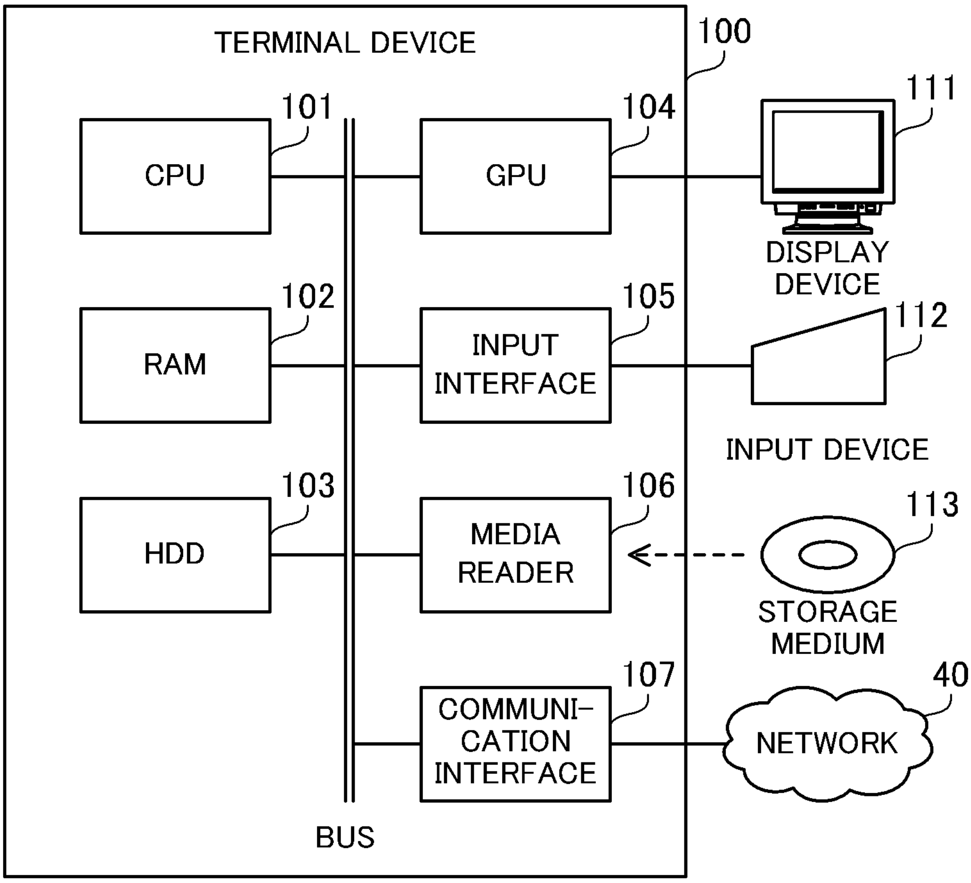
TERMINAL DEVICE
100
CPU
101
GPU
104
111
DISPLAY DEVICE
RAM
102
INPUT INTERFACE
105
112
INPUT DEVICE
HDD
103
MEDIA READER
106
113
STORAGE MEDIUM
COMMUNI-CATION INTERFACE
107
40
NETWORK
BUS

FIG. 3

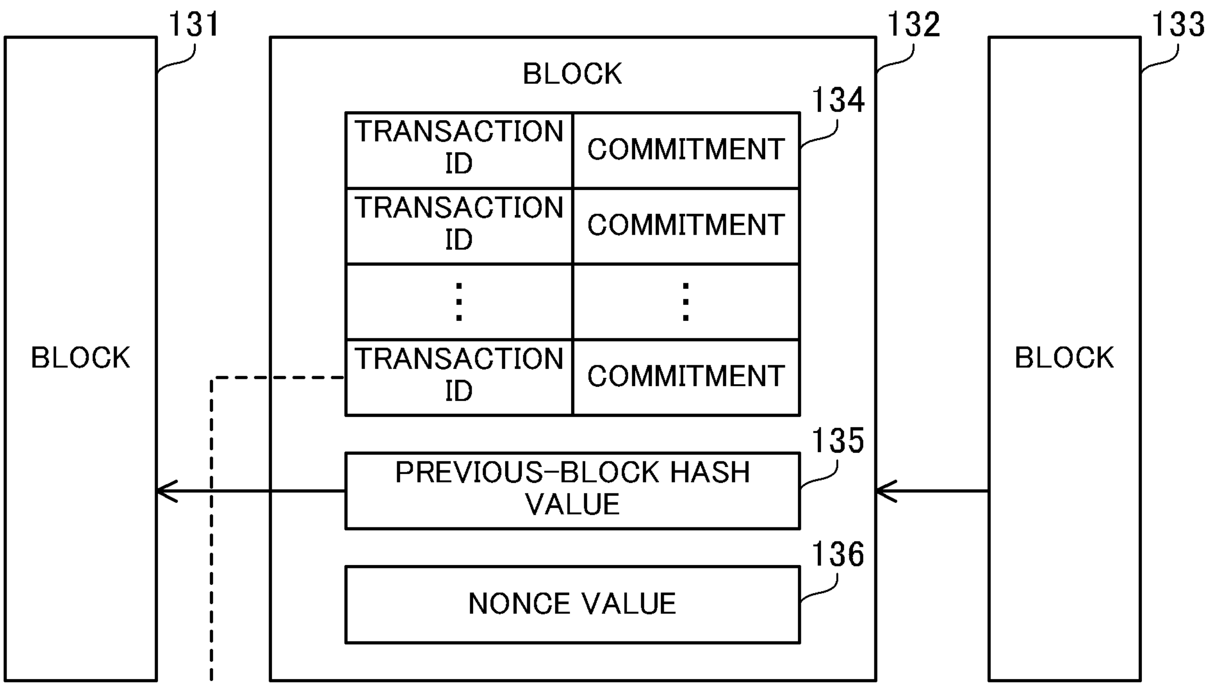


TRANSACTION DATA

137

| ITEM NUMBER | ITEM NAME | VALUE |
|---|---|---|
| 1 | DESTINATION | COMPANY A |
| 2 | REMITTANCE AMOUNT | 1,000,000 yen |
| 3 | REMITTANCE DATE | October 22, 2020 |
| 4 | PRODUCT | PRODUCT B |

FIG. 4

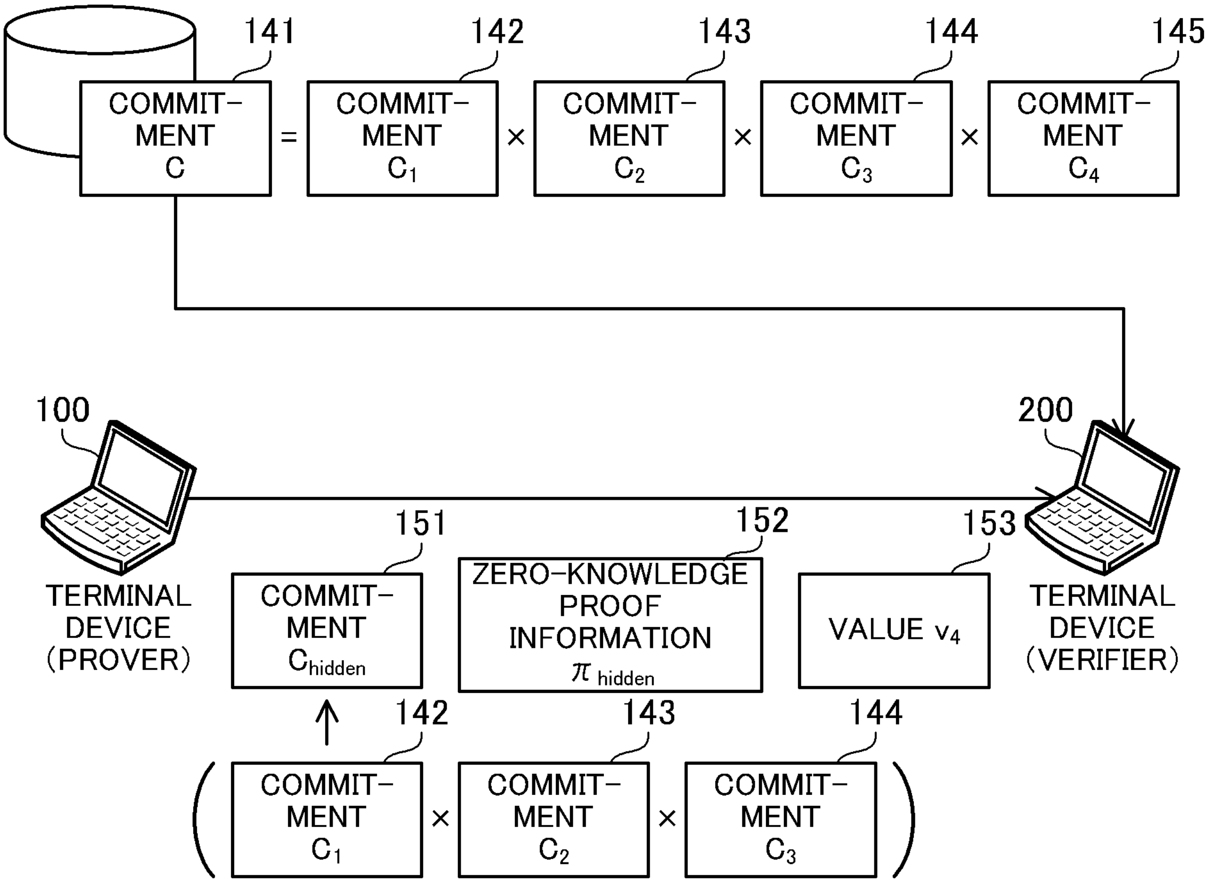
141
COMMIT-MENT C
=
142
COMMIT-MENT C1
×
143
COMMIT-MENT C2
×
144
COMMIT-MENT C3
×
145
COMMIT-MENT C4
100
TERMINAL DEVICE (PROVER)
200
TERMINAL DEVICE (VERIFIER)
151
COMMIT-MENT Chidden
152
ZERO-KNOWLEDGE PROOF INFORMATION π hidden
153
VALUE v4
142
COMMIT-MENT C1
×
143
COMMIT-MENT C2
×
144
COMMIT-MENT C3

FIG. 5

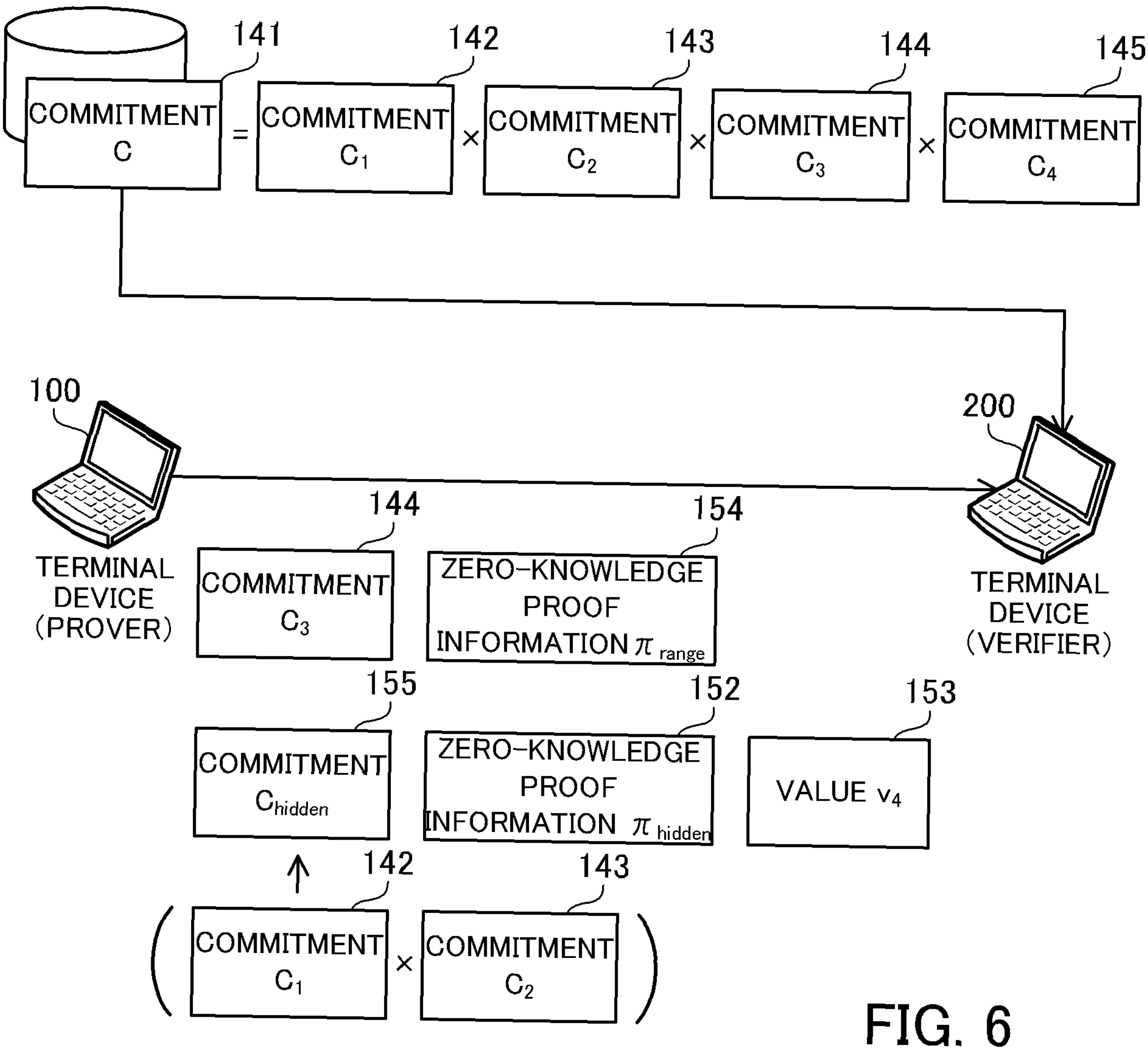
141
COMMITMENT C
=
142
COMMITMENT $C_1$
×
143
COMMITMENT $C_2$
×
144
COMMITMENT $C_3$
×
145
COMMITMENT $C_4$
100
TERMINAL DEVICE (PROVER)
200
TERMINAL DEVICE (VERIFIER)
144
COMMITMENT $C_3$
154
ZERO-KNOWLEDGE PROOF INFORMATION $\pi_{range}$
155
COMMITMENT $C_{hidden}$
152
ZERO-KNOWLEDGE PROOF INFORMATION $\pi_{hidden}$
153
VALUE $v_4$
142
COMMITMENT $C_1$
×
143
COMMITMENT $C_2$

FIG. 6

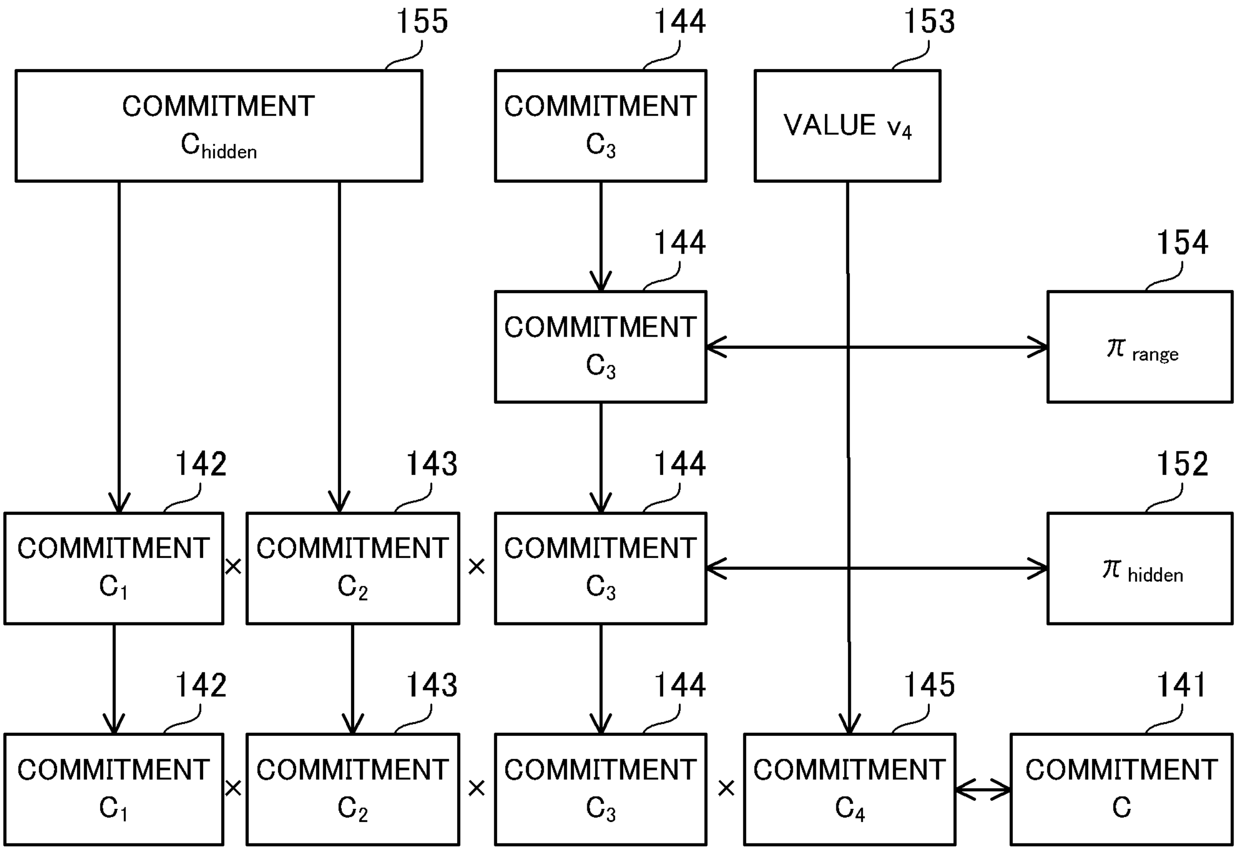
155
COMMITMENT
$C_{hidden}$
144
COMMITMENT
$C_3$
153
VALUE $v_4$
144
COMMITMENT
$C_3$
154
$\pi_{range}$
142
COMMITMENT
$C_1$
×
143
COMMITMENT
$C_2$
×
144
COMMITMENT
$C_3$
152
$\pi_{hidden}$
142
COMMITMENT
$C_1$
×
143
COMMITMENT
$C_2$
×
144
COMMITMENT
$C_3$
×
145
COMMITMENT
$C_4$
141
COMMITMENT
C

FIG. 7

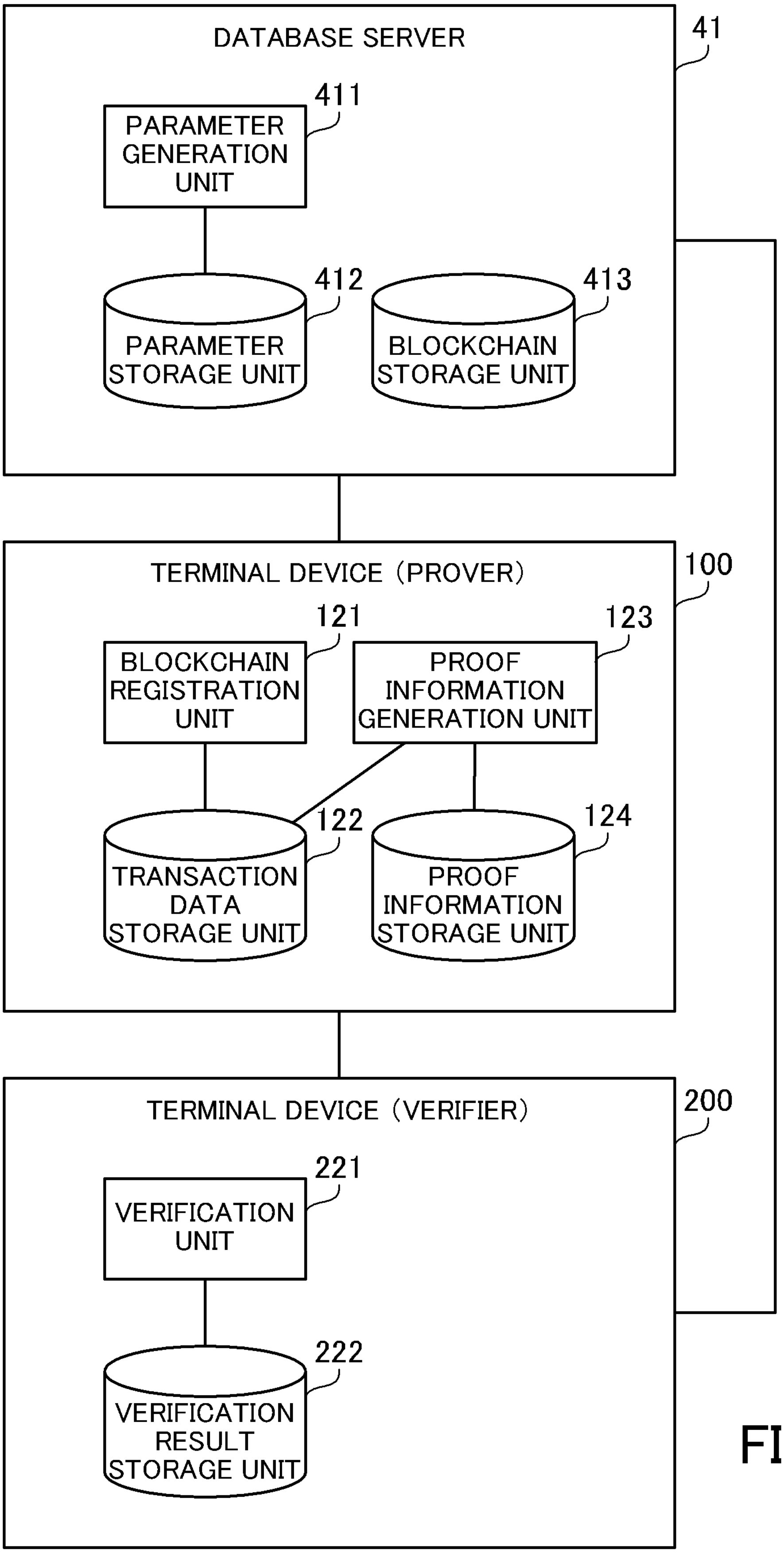
DATABASE SERVER
41
411
PARAMETER GENERATION UNIT
412
PARAMETER STORAGE UNIT
413
BLOCKCHAIN STORAGE UNIT
TERMINAL DEVICE (PROVER)
100
121
BLOCKCHAIN REGISTRATION UNIT
123
PROOF INFORMATION GENERATION UNIT
122
TRANSACTION DATA STORAGE UNIT
124
PROOF INFORMATION STORAGE UNIT
TERMINAL DEVICE (VERIFIER)
200
221
VERIFICATION UNIT
222
VERIFICATION RESULT STORAGE UNIT

FIG. 8

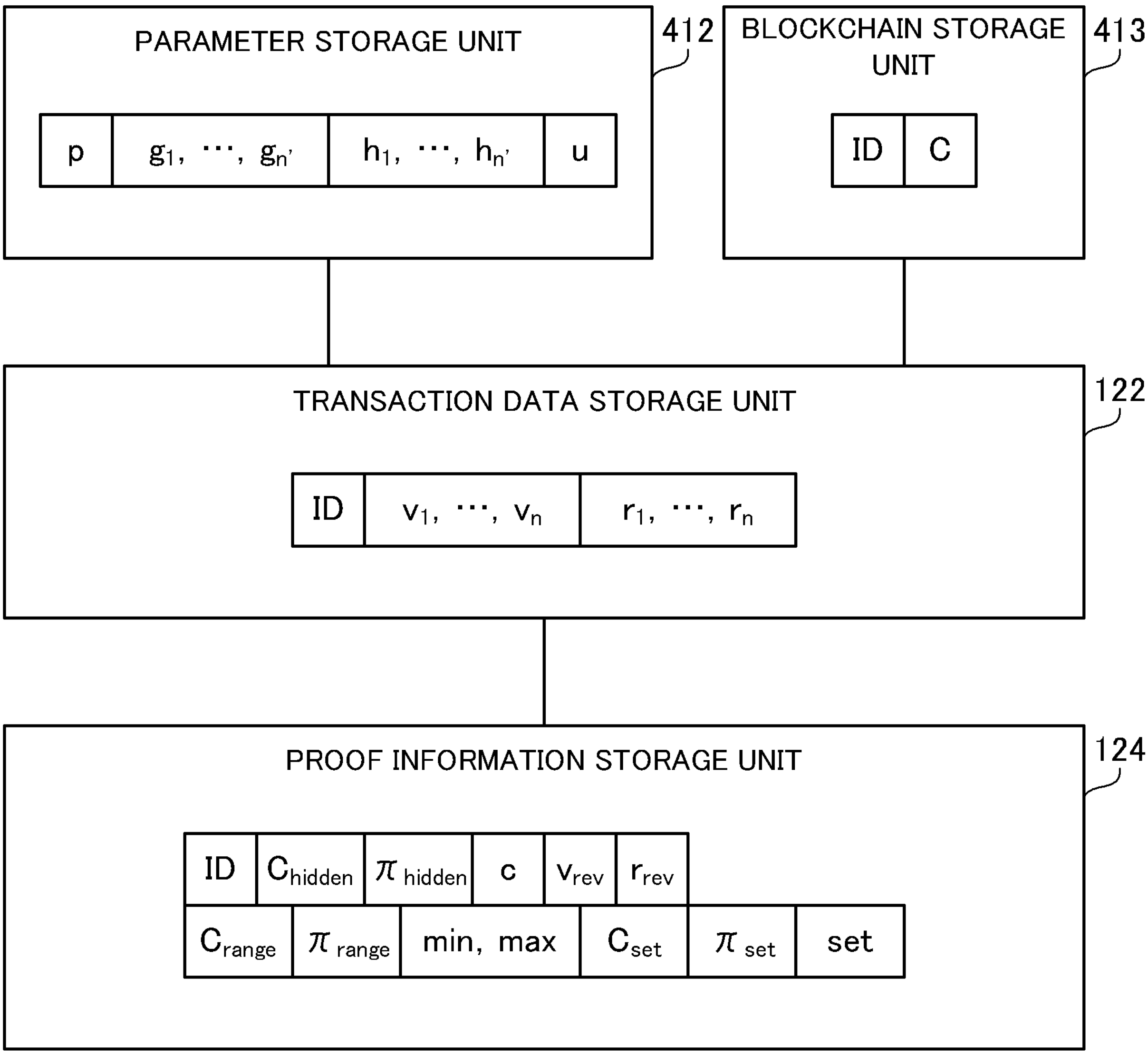
PARAMETER STORAGE UNIT
p
g1, ···, gn'
h1, ···, hn'
u
412
BLOCKCHAIN STORAGE UNIT
ID
C
413
TRANSACTION DATA STORAGE UNIT
ID
v1, ···, vn
r1, ···, rn
122
PROOF INFORMATION STORAGE UNIT
ID
Chidden
π hidden
c
vrev
rrev
Crange
π range
min, max
Cset
π set
set
124

FIG. 9

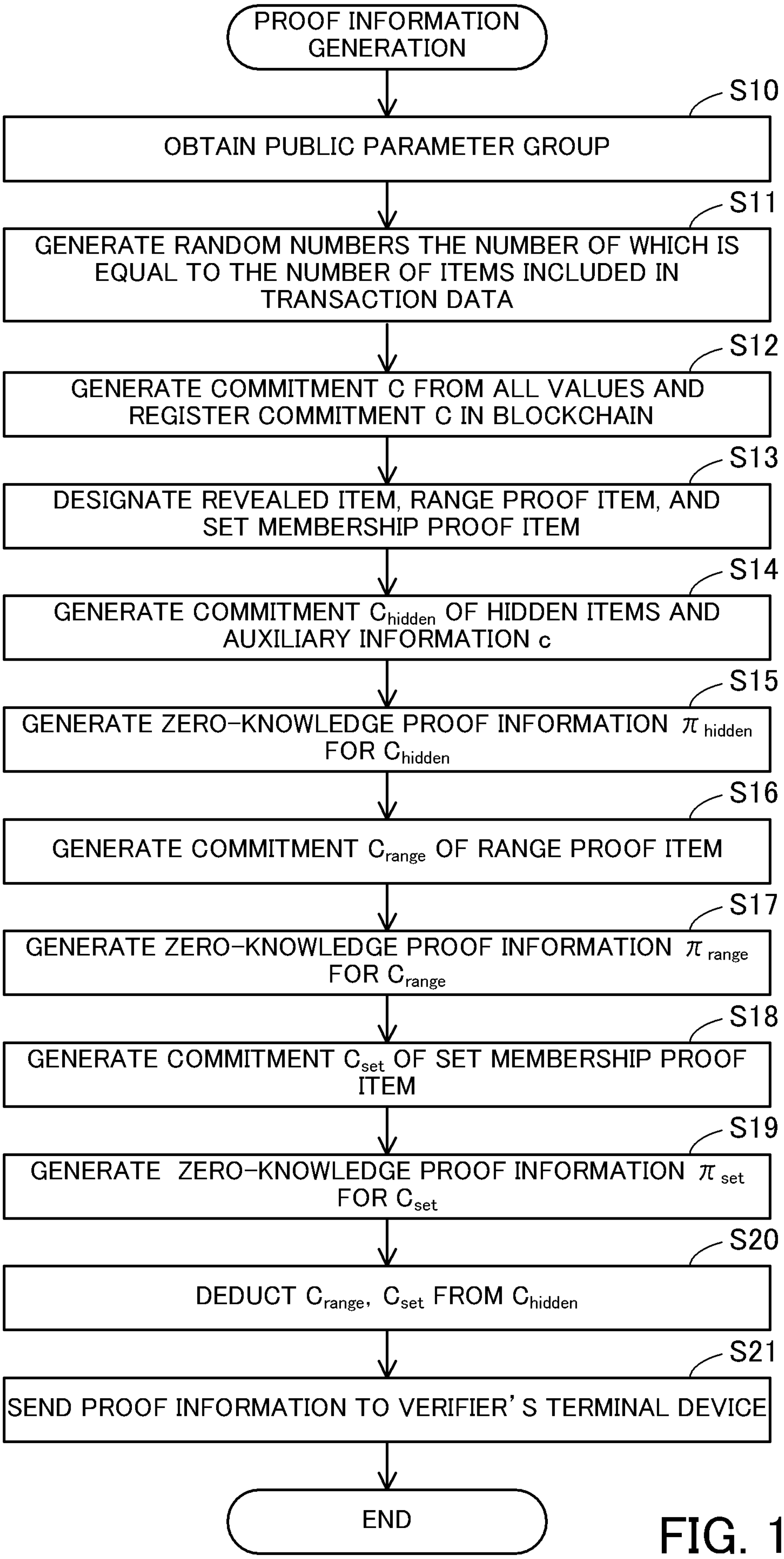
PROOF INFORMATION GENERATION
S10
OBTAIN PUBLIC PARAMETER GROUP
S11
GENERATE RANDOM NUMBERS THE NUMBER OF WHICH IS EQUAL TO THE NUMBER OF ITEMS INCLUDED IN TRANSACTION DATA
S12
GENERATE COMMITMENT C FROM ALL VALUES AND REGISTER COMMITMENT C IN BLOCKCHAIN
S13
DESIGNATE REVEALED ITEM, RANGE PROOF ITEM, AND SET MEMBERSHIP PROOF ITEM
S14
GENERATE COMMITMENT $C_{hidden}$ OF HIDDEN ITEMS AND AUXILIARY INFORMATION c
S15
GENERATE ZERO-KNOWLEDGE PROOF INFORMATION $\pi_{hidden}$ FOR $C_{hidden}$
S16
GENERATE COMMITMENT $C_{range}$ OF RANGE PROOF ITEM
S17
GENERATE ZERO-KNOWLEDGE PROOF INFORMATION $\pi_{range}$ FOR $C_{range}$
S18
GENERATE COMMITMENT $C_{set}$ OF SET MEMBERSHIP PROOF ITEM
S19
GENERATE ZERO-KNOWLEDGE PROOF INFORMATION $\pi_{set}$ FOR $C_{set}$
S20
DEDUCT $C_{range}$, $C_{set}$ FROM $C_{hidden}$
S21
SEND PROOF INFORMATION TO VERIFIER'S TERMINAL DEVICE
END

FIG. 10

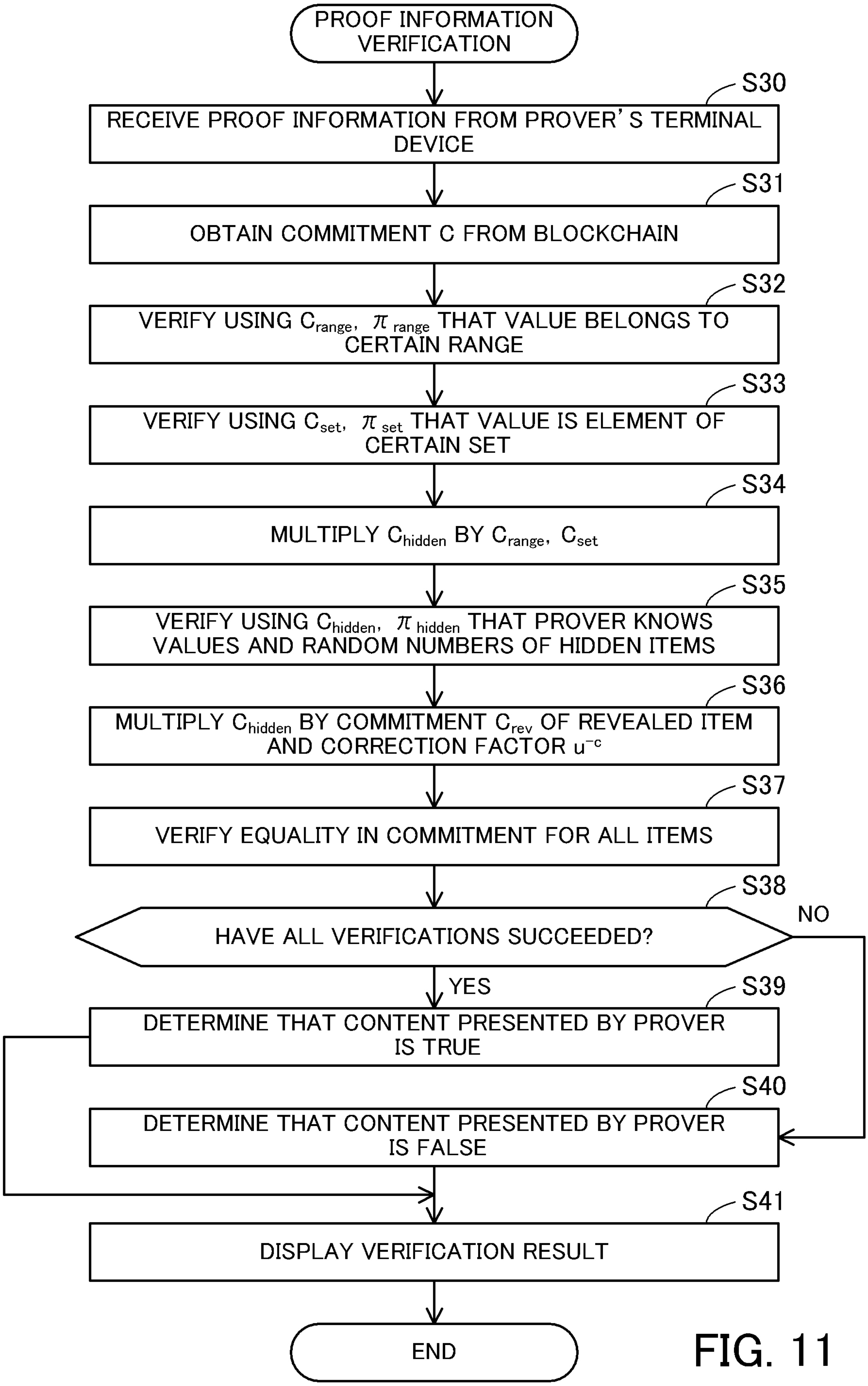
PROOF INFORMATION VERIFICATION
S30
RECEIVE PROOF INFORMATION FROM PROVER'S TERMINAL DEVICE
S31
OBTAIN COMMITMENT C FROM BLOCKCHAIN
S32
VERIFY USING $C_{range}$, $\pi_{range}$ THAT VALUE BELONGS TO CERTAIN RANGE
S33
VERIFY USING $C_{set}$, $\pi_{set}$ THAT VALUE IS ELEMENT OF CERTAIN SET
S34
MULTIPLY $C_{hidden}$ BY $C_{range}$, $C_{set}$
S35
VERIFY USING $C_{hidden}$, $\pi_{hidden}$ THAT PROVER KNOWS VALUES AND RANDOM NUMBERS OF HIDDEN ITEMS
S36
MULTIPLY $C_{hidden}$ BY COMMITMENT $C_{rev}$ OF REVEALED ITEM AND CORRECTION FACTOR $u^{-c}$
S37
VERIFY EQUALITY IN COMMITMENT FOR ALL ITEMS
S38
HAVE ALL VERIFICATIONS SUCCEEDED?
NO
YES
S39
DETERMINE THAT CONTENT PRESENTED BY PROVER IS TRUE
S40
DETERMINE THAT CONTENT PRESENTED BY PROVER IS FALSE
S41
DISPLAY VERIFICATION RESULT
END

FIG. 11

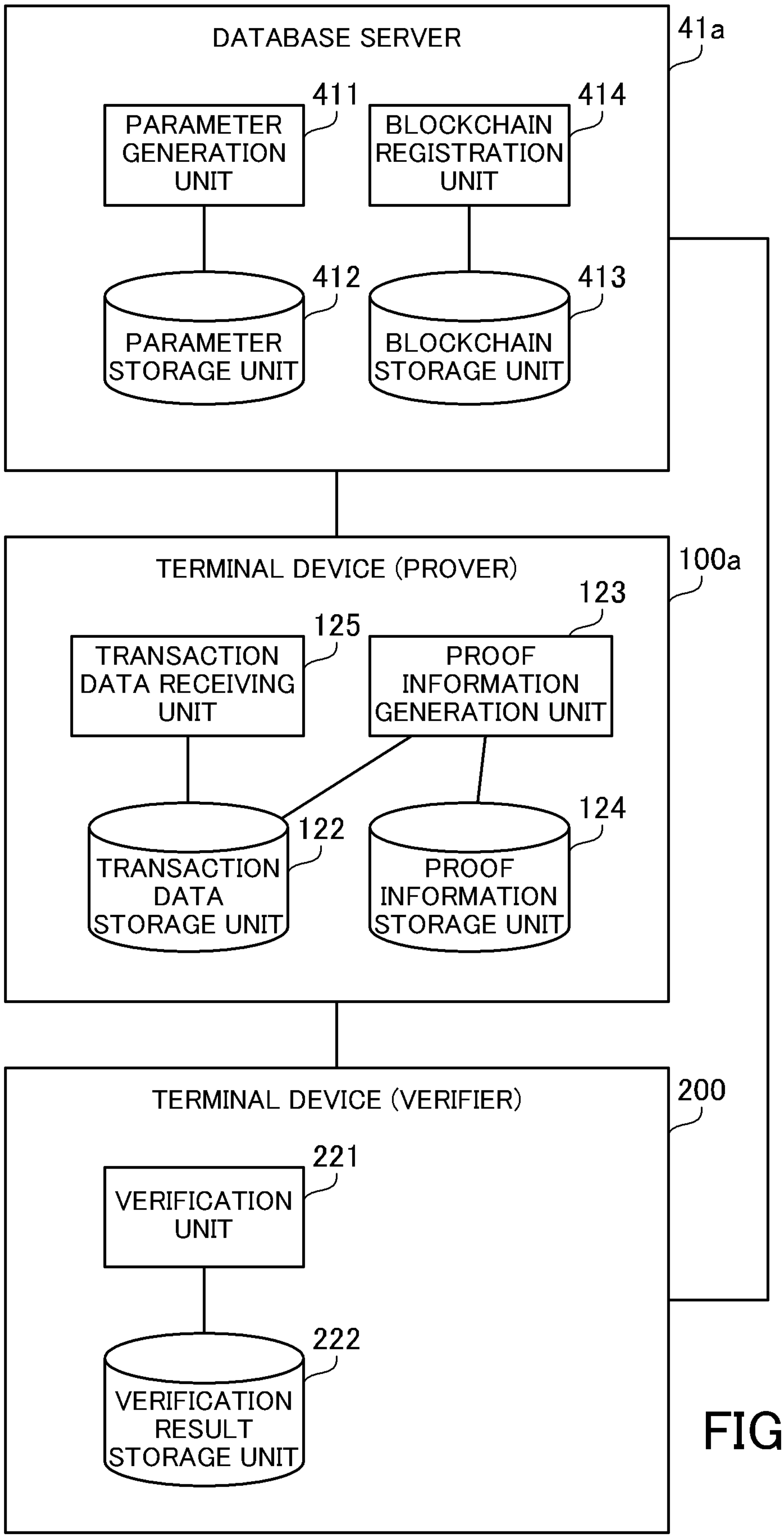
DATABASE SERVER
41a
411
PARAMETER GENERATION UNIT
414
BLOCKCHAIN REGISTRATION UNIT
412
PARAMETER STORAGE UNIT
413
BLOCKCHAIN STORAGE UNIT
TERMINAL DEVICE (PROVER)
100a
123
125
TRANSACTION DATA RECEIVING UNIT
PROOF INFORMATION GENERATION UNIT
124
122
TRANSACTION DATA STORAGE UNIT
PROOF INFORMATION STORAGE UNIT
TERMINAL DEVICE (VERIFIER)
200
221
VERIFICATION UNIT
222
VERIFICATION RESULT STORAGE UNIT

FIG. 12

## INTERNATIONAL SEARCH REPORT

International application No.
PCT/JP2020/049119

A. CLASSIFICATION OF SUBJECT MATTER
H04L 9/32(2006.01)i
FI: H04L9/00 675C; H04L9/00 675Z
According to International Patent Classification (IPC) or to both national classification and IPC

B. FIELDS SEARCHED

Minimum documentation searched (classification system followed by classification symbols)
H04L9/32

Documentation searched other than minimum documentation to the extent that such documents are included in the fields searched

| | |
|---|---|
| Published examined utility model applications of Japan | 1922-1996 |
| Published unexamined utility model applications of Japan | 1971-2021 |
| Registered utility model specifications of Japan | 1996-2021 |
| Published registered utility model applications of Japan | 1994-2021 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 2003-188872 A (INTERNATIONAL BUSINESS MACHINES CORP.) 04 July 2003 (2003-07-04) in particular, paragraphs [0065]-[0080], etc. | 1-9 |
| A | JP 2020-502865 A (ALIBABA GROUP HOLDING LIMITED) 23 January 2020 (2020-01-23) in particular, paragraphs [0069]-[0081], etc. | 1-9 |

☐ Further documents are listed in the continuation of Box C.  ☒ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 11 March 2021 (11.03.2021) | 23 March 2021 (23.03.2021) |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**INTERNATIONAL SEARCH REPORT**
Information on patent family members

International application no.
PCT/JP2020/049119

| Patent Documents referred in the Report | Publication Date | Patent Family | Publication Date |
|---|---|---|---|
| JP 2003-188872 A | 04 Jul. 2003 | US 2004/0003254 A1 in particular, paragraphs [0181]-[0227], etc. | |
| JP 2020-502865 A | 23 Jan. 2020 | WO 2019/072261 A2 in particular, paragraphs [0072]-[0084], etc. | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description


- Specification of the Identity Mixer Cryptographic Library. *IBM Research - Zurich,* 29 April 2010
- **TORBEN PRYDS PEDERSEN.** Non-Interactive and Information-Theoretic Secure Verifiable Secret Sharing. *Proceedings of the 11th Annual International Cryptology Conference (CRYPTO '91),* 11 August 1991, 129-140
- **BENEDIKT BUNZ ; JONATHAN BOOTLE ; DAN BONEH ; ANDREW POELSTRA ; PIETER WUILLE ; GREG MAXWELL.** Bulletproofs: Short Proofs for Confidential Transactions and More. *Proceedings of the 2018 IEEE Symposium on Security and Privacy,* 21 May 2018, 315-334
- **DANIEL BENARROCH ; MATTEO CAMPANELLI ; DARIO FIORE ; KOBI GURKAN ; DIMITRIS KOLONELOS.** Zero-Knowledge Proofs for Set Membership: Efficient, Succinct, Modular. *Cryptology ePrint Archive, Report 2019/1255,* 27 October 2019